(19) Europäisches Patentamt / European Patent Office / Office européen des brevets

(11) **EP 3 063 881 B1**

(12) **EUROPEAN PATENT SPECIFICATION**

(45) Date of publication and mention
of the grant of the patent:
**07.10.2020 Bulletin 2020/41**

(21) Application number: **14858111.9**

(22) Date of filing: **03.11.2014**

(51) Int Cl.:
*H04B 7/26* (2006.01)    *H04W 4/00* (2018.01)

(86) International application number:
**PCT/US2014/063742**

(87) International publication number:
**WO 2015/066645 (07.05.2015 Gazette 2015/18)**

(54) **METHODS AND APPARATUS FOR ENHANCED COVERAGE TRANSMISSION FOR LTE ADVANCED**

VERFAHREN UND VORRICHTUNG ZUM SENDEN MIT VERBESSERTER REICHWEITE FÜR LTE-ADVANCED

PROCÉDÉS ET APPAREILS POUR TRANSMISSION À COUVERTURE ÉTENDUE POUR LTE-ADVANCED

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2013 US 201361899025 P
14.11.2013 US 201361904251 P
27.11.2013 US 201361910014 P
28.02.2014 US 201461946251 P**

(43) Date of publication of application:
**07.09.2016 Bulletin 2016/36**

(60) Divisional application:
**18213172.2 / 3 480 971**

(73) Proprietor: **Samsung Electronics Co., Ltd.
Gyeonggi-do 16677 (KR)**

(72) Inventors:
• **NG, Boon Loong**
  **Richardson, Texas 75082 (US)**
• **VAN LIESHOUT, Gerardus Johannes Petrus**
  **Richardson, Texas 75082 (US)**
• **VAN DER VELDE, Himke**
  **Richardson, Texas 75082 (US)**
• **LI, Ying**
  **Richardson, Texas 75082 (US)**
• **JEONG, Kyeongin**
  **Gyeonggi-do 16677 (KR)**
• **PAPASAKELLARIOU, Aris**
  **Richardson, Texas 75082 (US)**

(74) Representative: **Nederlandsch Octrooibureau
P.O. Box 29720
2502 LS The Hague (NL)**

(56) References cited:
**US-A1- 2013 121 249**

• **FUJITSU: "Repetitive Patterns Impact upon MTC Device's Overall Access Lat", 3GPP DRAFT; R1-133130 REPETITIVE PATTERN IMPACT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716345, Retrieved from the Internet: URL:http://www.3gpp.org/ftp/tsg_ran/WG1_RL1/TSGR1_74/Docs/ [retrieved on 2013-08-10]**
• **HUAWEI ET AL: "Further analysis and evaluation for PBCH coverage improvement for MTC", 3GPP DRAFT; R1-130886, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, USA; 20130415 - 20130419 6 April 2013 (2013-04-06), XP050696887, Retrieved from the Internet: URL:http://www.3gpp.org/ftp/tsg_ran/WG1_RL1/TSGR1_72b/Docs/ [retrieved on 2013-04-06]**

**(Cont. next page)**

- ERICSSON ET AL: "System information for enhanced coverage MTC UE", 3GPP DRAFT; R1-133422 SYSTEM INFORMATION FOR ENHANCED COVERAGE MTC UE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Barcelona, Spain; 20130819 - 20130823 10 August 2013 (2013-08-10), XP050716531, Retrieved from the Internet: URL:http://www.3gpp.org/ftp/tsg_ran/WG1_RL 1/TSGR1_74/Docs/ [retrieved on 2013-08-10]
- NSN ET AL.: 'Coverage Enhancement for MIB and SIBs' RL-134516, 3GPP TSG RAN WG1 MEETING #74BIS 28 September 2013, GUANGZHOU, CHINA, XP050717618
- LG ELECTRONICS: 'PBCH transmission for coverage enhancement of MTC UEs', R1- 134391' 3GPP TSG RAN WG1 MEETING #74BIS 28 September 2013, GUANGZHOU, CHINA, XP050717516
- ZTE: 'Coverage Enhancement of Physical Broadcast Channel and SIB Transmission' RL-134302, 3GPP TSG RAN WG1 MEETING #74BIS 28 September 2013, GUANGZHOU, CHINA, XP050717446
- MEDIATEK INC.: 'Discussion on PBCH and System Information Coverage Enhancement' R1-134441, 3GPP TSG RAN WG1 MEETING #74BIS 28 September 2013, GUANGZHOU, CHINA, XP050717558

**Description**

TECHNICAL FIELD

The present application relates to a system and method for enhanced coverage transmission for long term evolution advanced communications systems in support of machine type communications.

BACKGROUND

To meet the demand for wireless data traffic having increased since deployment of 4G (4th-Generation) communication systems, efforts have been made to develop an improved 5G (5th-Generation) or pre-5G communication system. Therefore, the 5G or pre-5G communication system is also called a 'beyond 4G network' or a 'post LTE system' .

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G communication systems.

In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

Certain wireless communications systems include a DownLink (DL) that conveys signals from transmission points such as Base Stations (BSs) or NodeBs to User Equipments (UEs) and an UpLink (UL) that conveys signals from UEs to reception points such as NodeBs. A UE, also commonly referred to as a terminal or a mobile station, may be fixed or mobile. A NodeB, which is generally a fixed station, may also be referred to as an access point or other equivalent terminology.

DL signals include data signals conveying information content, control signals conveying DL Control Information (DCI), and Reference Signals (RS), which are also known as pilot signals. DL signals are transmitted using Orthogonal Frequency Division Multiplexing (OFDM). A NodeB transmits data information or DCI through respective Physical DL Shared CHannels (PDSCHs) or Physical DL Control CHannels (PDCCHs). A NodeB transmits one or more of RS types including a UE-Common RS (CRS), a Channel State Information RS (CSI-RS), and a DeModulation RS (DMRS). A CRS is transmitted over a DL system BandWidth (BW) and can be used by UEs to demodulate data or control information or to perform measurements. To reduce CRS overhead, a NodeB can transmit a CSI-RS with smaller time and/or frequency domain density than a CRS. DMRS can be transmitted only in a BW of a respective PDSCH or PDCCH and a UE can use a DMRS to demodulate information in a PDSCH or PDCCH.

Fujitsu, "Repetitive Patterns Impact upon MTC Device's Overall Access Lat" (3GPP Draft; R1-133130 REPETITIVE PATTERN IMPACT, 3rd Generation Partnership Project (3GPP), vol. RAN WG1, Barcelona, Spain, 10 August 2013) discloses potential repetition pattern impact upon the overall MTC access duration.

SUMMARY

In a first embodiment, a method for communicating with a coverage enhanced user equipment (UE) is provided. The method includes transmitting system information, SI, to the coverage enhanced UE in a machine type communication, MTC, frame structure, the MTC frame structure comprising intermittent transmission periods of a number of MTC SI transmissions, each MTC SI transmission comprising an MTC master information block, MIB, or one of a number of MTC system information blocks, SIBs, wherein two consecutive MTC SI transmissions are separated by N number of frames, wherein N is an integer number, wherein transmitting comprises:transmitting a first MTC SI transmission after a first fixed number of frames from a last frame on a MTC physical broadcast channel, MTC PBCH, and transmitting a second MTC SI transmission after a second fixed number of frames from a transmission frame of the first MTC SI transmission.

In a second embodiment, a base station (BS) configured to communicate with a coverage enhanced user equipment (UE) according to the method of the first embodiment is provided.

In a third embodiment, a method for communicating in a coverage enhanced user equipment, UE, is provided, the method comprising: receiving, from a base station, system information, SI, in a machine type communication, MTC, frame structure, the MTC frame structure comprising intermittent transmission periods of a number of MTC SI transmissions, each MTC SI transmission comprising an MTC master information block, MIB, or one of a number of MTC system information blocks, SIBs,wherein two consecutive MTC SI transmissions are separated by N number of frames, wherein N is an integer number,wherein receiving comprises receiving a first MTC SI transmission after a first fixed number of frames from a last frame on a MTC physical broadcast channel, MTC PBCH; and receiving a second MTC SI transmission after a second fixed number of frames from a transmission of the first MTC SI transmission.

In a fourth embodiment, a coverage enhanced user equipment, UE, is provided for communicating with a base station, the coverage enhanced UE comprising a controller configured to the control the UE to operate according to the method of the third embodiment.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Definitions for other certain words and phrases are provided throughout this patent document. Those of ordinary skill in the art should understand that in many if not most instances, such definitions apply to prior as well as future uses of such defined words and phrases.

BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an example wireless network according to this disclosure;
FIGURES 2A and 2B illustrate example wireless transmit and receive paths according to this disclosure;
FIGURE 3A illustrates an example user equipment according to this disclosure;
FIGURE 3B illustrates an example eNB according to this disclosure;
FIGURE 4 illustrates a change of system information according to this disclosure;
FIGURE 5 illustrates intermittent MTC PBCH transmissions according to this disclosure;
FIGURE 6 illustrates Transmissions of MTC MIB, MTC SIB1 and MTC SIB2 over time according to this disclosure;
FIGURE 7 illustrates MTC MIB and MTC SIBs within a MTC system information modification period according to this disclosure;
FIGURE 8 illustrates UE procedure 800 to determine MTC PBCH intermittent transmission pattern according to this disclosure;
FIGURE 9 illustrates multiple transmissions of MTC SI within the MTC SI modification period according to this disclosure;
FIGURE 10 illustrates MTC SI window length according to this disclosure;
FIGURE 11 illustrates Separate SI window length and SI periodicity for MTC UEs according to this disclosure;
FIGURE 12 illustrates Separate SI window length but same SI periodicity as legacy SI periodicity for MTC UEs according to this disclosure;
FIGURE 13 illustrates Example procedure of MTC non-essential SIBs delivery via dedicated RRC signaling according to this disclosure;
FIGURE 14 illustrates Example procedure of MTC non-essential SIBs delivery via dedicated RRC signaling with update via broadcast channel according to this disclosure;
FIGURE 15 illustrates a first SIB1 transmission according to this disclosure;
FIGURE 16 illustrates a second SIB1 transmission according to this disclosure;
FIGURE 17 illustrates third SIB1 transmission according to this disclosure; and

FIGURE 18 illustrates a process to select the set of TBs to receive according to this disclosure.

DETAILED DESCRIPTION

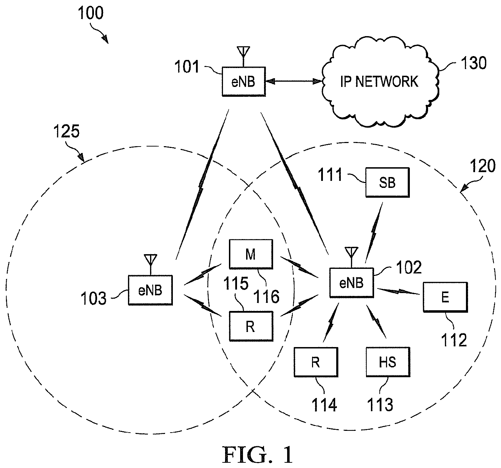

FIGURES 1 through 18, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communications system.

Reference is made to the following documents and standard descriptions: 3GPP TS 36.211 v11.2.0, "E-UTRA, Physical channels and modulation" (REF 1); 3GPP TS 36.212 v11.2.0, "E-UTRA, Multiplexing and Channel coding" (REF 2); 3GPP TS 36.213 v11.2.0, "E-UTRA, Physical Layer Procedures" (REF 3); 3GPP TS 36.214 v11.1.0, "E-UTRA, Physical Layer Measurement" (REF 4); 3GPP TS 36.300 V11.5.0, "E-UTRA and E-UTRAN, Overall description. Stage 2" (REF 5); 3GPP TS 36.321 V11.2.0, "E-UTRA, MAC protocol specification" (REF 6); 3GPP TS 36.331 V11.3.0, "E-UTRA, RRC Protocol specification." (REF 7); 3GPP TS 36.133 V11.4.0, "E-UTRA, Requirements for support of radio resource management" (REF 8); 3GPP TR 36.814 V9.0.0, "E-UTRA, Further advancements for E-UTRA physical layer aspects" (REF 9); and WD-201111-007-1-US0, "Design of Time-Tracking Reference Signal" (REF 10).

The present disclosure relates generally to wireless communication systems and, more specifically, to support of machine type communications. A communication system includes a DownLink (DL) that conveys signals from transmission points such as Base Stations (BSs) or NodeBs to User Equipments (UEs) and an UpLink (UL) that conveys signals from UEs to reception points such as NodeBs. A UE for Machine Type Communication will be referred to as a MTC UE. A NodeB, which is generally a fixed station, also can be referred to as an access point or other equivalent terminology.

DL signals include data signals conveying information content, control signals conveying DL Control Information (DCI), and Reference Signals (RS), which are also known as pilot signals. DL signals are transmitted using Orthogonal Frequency Division Multiplexing (OFDM). A NodeB transmits data information or DCI through respective Physical DL Shared CHannels (PDSCHs) or Physical DL Control CHannels (PDCCHs). A NodeB transmits one or more of RS types including a UE-Common RS (CRS), a Channel State Information RS (CSI-RS), and a DeModulation RS (DMRS). A CRS is transmitted over a DL system BandWidth (BW) and can be used by UEs to demodulate data or control information or to perform measurements. To reduce CRS overhead, a NodeB can transmit a CSI-RS with smaller time and/or frequency domain density than a CRS. DMRS can be transmitted only in a BW of a respective PDSCH or PDCCH and a UE can use a DMRS to demodulate information in a PDSCH or PDCCH.

To assist cell search and synchronization, a cell transmits synchronization signals such as a PSS and SSS. Although having a same structure, time-domain positions of synchronization signals within a frame that includes ten sub-frames can differ depending on whether a cell is operating in Frequency Division Duplex (FDD) or Time Division Duplex (TDD). Therefore, after acquiring synchronization signals, a UE can determine whether a cell operates in FDD or in TDD and a sub-frame index within a frame. The PSS and SSS occupy the central 72 sub-carriers, also referred to as Resource Elements (REs), of a DL operating BW. Additionally, the PSS and SSS can inform of a Physical Cell IDentifier (PCID) for a cell and therefore, after acquiring the PSS and SSS, the UE can know the PCID of the transmitting cell.

FIGURE 1 illustrates an example wireless network 100 according to this disclosure. The embodiment of the wireless network 100 shown in FIGURE 1 is for illustration only. Other embodiments of the wireless network 100 could be used without departing from the scope of this disclosure.

As shown in FIGURE 1, the wireless network 100 includes an eNodeB (eNB) 101, an eNB 102, and an eNB 103. The eNB 101 communicates with the eNB 102 and the eNB 103. The eNB 101 also communicates with at least one Internet Protocol (IP) network 130, such as the Internet, a proprietary IP network, or other data network.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

The eNB 102 provides wireless broadband access to the network 130 for a first plurality of user equipments (UEs) within a coverage area 120 of the eNB 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R), which may be a mobile device (M) like a cell phone, a wireless laptop, a wireless PDA, or the like; and a Machine-Type Communication (MTC) UE 116, which may be a mobile device (M) like a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the MTC UE 116. In some embodiments, one or more of the eNBs 101-103 may communicate with each other and with the UEs 111-116 using 5G, LTE, LTE-A, WiMAX, or other advanced wireless communication techniques.

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, may have other shapes, including irregular shapes, depending upon the configuration of the eNBs and variations in the radio environment associated with natural and man-made obstructions.

As described in more detail below, one or more of eNB 101, eNB 102 and eNB 103 are configured to provide enhanced coverage transmission for long term evolution advanced communications systems. More specifically, one or more of eNB 101, eNB 102 and eNB 103 are configured to support of machine type communications.

Although FIGURE 1 illustrates one example of a wireless network 100, various changes may be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNB 101, 102, and/or 103 could provide access to other or additional external networks, such as external telephone networks or other types of data networks.

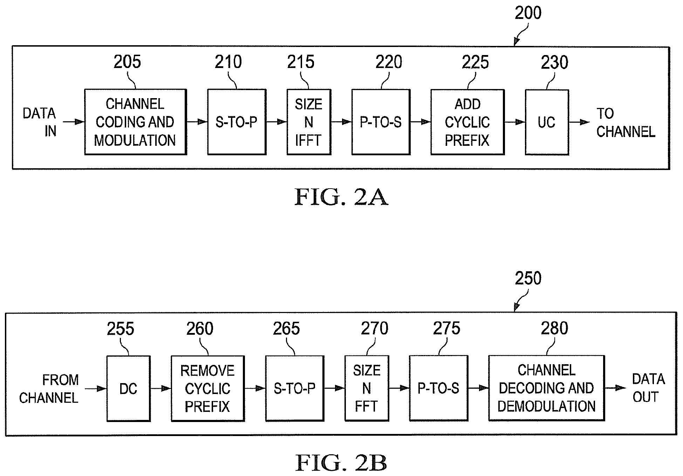

FIGURES 2A and 2B illustrate example wireless transmit and receive paths according to this disclosure. In the following description, a transmit path 200 may be described as being implemented in an eNB (such as eNB 102), while a receive path 250 may be described as being implemented in a UE (such as MTC UE 116). However, it will be understood that the receive path 250 could be implemented in an eNB and that the transmit path 200 could be implemented in a UE. In some embodiments, the transmit path 200 and receive path 250 are configured to provide enhanced coverage transmission for long term evolution advanced communications systems. More specifically, the transmit path 200 and receive path 250 are configured to support of machine type communications.

The transmit path 200 includes a channel coding and modulation block 205, a serial-to-parallel (S-to-P) block 210, a size N Inverse Fast Fourier Transform (IFFT) block 215, a parallel-to-serial (P-to-S) block 220, an add cyclic prefix block 225, and an up-converter (UC) 230. The receive path 250 includes a down-converter (DC) 255, a remove cyclic prefix block 260, a serial-to-parallel (S-to-P) block 265, a size N Fast Fourier Transform (FFT) block 270, a parallel-to-serial (P-to-S) block 275, and a channel decoding and demodulation block 280.

In the transmit path 200, the channel coding and modulation block 205 receives a set of information bits, applies coding (such as a low-density parity check (LDPC) coding), and modulates the input bits (such as with Quadrature Phase Shift Keying (QPSK) or Quadrature Amplitude Modulation (QAM)) to generate a sequence of frequency-domain modulation symbols. The serial-to-parallel block 210 converts (such as de-multiplexes) the serial modulated symbols to parallel data in order to generate N parallel symbol streams, where N is the IFFT/FFT size used in the eNB 102 and the MTC UE 116. The size N IFFT block 215 performs an IFFT operation on the N parallel symbol streams to generate time-domain output signals. The parallel-to-serial block 220 converts (such as multiplexes) the parallel time-domain output symbols from the size N IFFT block 215 in order to generate a serial time-domain signal. The add cyclic prefix block 225 inserts a cyclic prefix to the time-domain signal. The up-converter 230 modulates (such as up-converts) the output of the add cyclic prefix block 225 to an RF frequency for transmission via a wireless channel. The signal may also be filtered at baseband before conversion to the RF frequency.

A transmitted RF signal from the eNB 102 arrives at the MTC UE 116 after passing through the wireless channel, and reverse operations to those at the eNB 102 are performed at the MTC UE 116. The down-converter 255 down-converts the received signal to a baseband frequency, and the remove cyclic prefix block 260 removes the cyclic prefix to generate a serial time-domain baseband signal. The serial-to-parallel block 265 converts the time-domain baseband signal to parallel time domain signals. The size N FFT block 270 performs an FFT algorithm to generate N parallel frequency-domain signals. The parallel-to-serial block 275 converts the parallel frequency-domain signals to a sequence of modulated data symbols. The channel decoding and demodulation block 280 demodulates and decodes the modulated symbols to recover the original input data stream.

Each of the eNBs 101-103 may implement a transmit path 200 that is analogous to transmitting in the downlink to UEs 111-116 and may implement a receive path 250 that is analogous to receiving in the uplink from UEs 111-116. Similarly, each of UEs 111-116 may implement a transmit path 200 for transmitting in the uplink to eNBs 101-103 and may implement a receive path 250 for receiving in the downlink from eNBs 101-103.

Each of the components in FIGURES 2A and 2B can be implemented using only hardware or using a combination of hardware and software/firmware. As a particular example, at least some of the components in FIGURES 2A and 2B may be implemented in software, while other components may be implemented by configurable hardware or a mixture of software and configurable hardware. For instance, the FFT block 270 and the IFFT block 215 may be implemented as configurable software algorithms, where the value of size N may be modified according to the implementation.

Furthermore, although described as using FFT and IFFT, this is by way of illustration only and should not be construed to limit the scope of this disclosure. Other types of transforms, such as Discrete Fourier Transform (DFT) and Inverse Discrete Fourier Transform (IDFT) functions, could be used. It will be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURES 2A and 2B illustrate examples of wireless transmit and receive paths, various changes may be made to FIGURES 2A and 2B. For example, various components in FIGURES 2A and 2B could be combined, further subdivided, or omitted and additional components could be added according to particular needs. Also, FIGURES 2A and 2B are meant to illustrate examples of the types of transmit and receive paths that could be used in a wireless network. Any other suitable architectures could be used to support wireless communications in a wireless network.

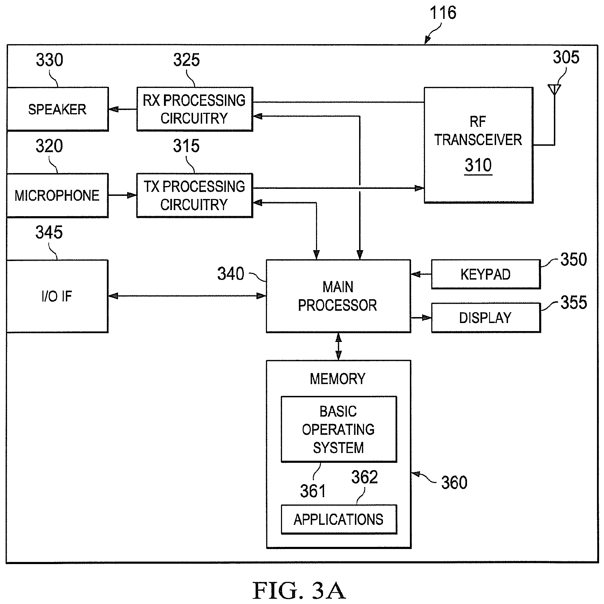

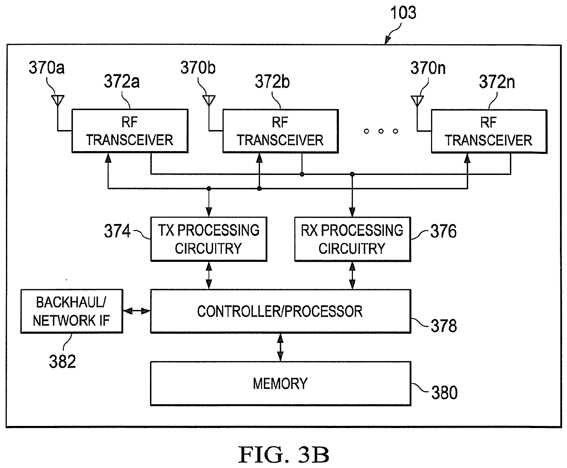

FIGURE 3A illustrates an example MTC UE 116 according to this disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3A does not limit the scope of this disclosure to any particular implementation of a UE. In certain embodiments, the UE 116 is configured as a Machine-Type Communication (MTC) UE.

As shown in FIGURE 3A, the MTC UE 116 includes an antenna 305, a radio frequency (RF) transceiver 310, transmit (TX) processing circuitry 315, a microphone 320, and receive (RX) processing circuitry 325. The MTC UE 116 also includes a speaker 330, a main processor 340, an input/output (I/O) interface (IF) 345, a keypad 350, a display 355, and a memory 360. The memory 360 includes a basic operating system (OS) program 361 and one or more applications 362.

The RF transceiver 310 receives, from the antenna 305, an incoming RF signal transmitted by an eNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the main processor 340 for further processing (such as for web browsing data).

The TX processing circuitry 315 receives analog or digital voice data from the microphone 320 or other outgoing baseband data (such as web data, e-mail, or interactive video game data) from the main processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The main processor 340 can include one or more processors or other processing devices and execute the basic OS program 361 stored in the memory 360 in order to control the overall operation of the MTC UE 116. For example, the main processor 340 could control the reception of forward channel signals and the transmission of reverse channel signals by the RF transceiver 310, the RX processing circuitry 325, and the TX processing circuitry 315 in accordance with well-known principles. In some embodiments, the main processor 340 includes at least one microprocessor or microcontroller.

The main processor 340 is also capable of executing other processes and programs resident in the memory 360, such as operations for enhanced coverage transmission for long term evolution advanced communications systems to support of machine type communications. The main processor 340 can move data into or out of the memory 360 as required by an executing process. In some embodiments, the main processor 340 is configured to execute the applications 362 based on the OS program 361 or in response to signals received from eNBs or an operator. The main processor 340 is also coupled to the I/O interface 345, which provides the MTC UE 116 with the ability to connect to other devices such as laptop computers and handheld computers. The I/O interface 345 is the communication path between these accessories and the main controller 340.

The main processor 340 is also coupled to the keypad 350 and the display unit 355. The operator of the MTC UE 116 can use the keypad 350 to enter data into the MTC UE 116. The display 355 may be a liquid crystal display or other display capable of rendering text and/or at least limited graphics, such as from web sites.

The memory 360 is coupled to the main processor 340. Part of the memory 360 could include a random access memory (RAM), and another part of the memory 360 could include a Flash memory or other read-only memory (ROM).

Although FIGURE 3A illustrates one example of MTC UE 116, various changes may be made to FIGURE 3A. For example, various components in FIGURE 3A could be combined, further subdivided, or omitted and additional components could be added according to particular needs. As a particular example, the main processor 340 could be divided into multiple processors, such as one or more central processing units (CPUs) and one or more graphics processing units (GPUs). Also, while FIGURE 3A illustrates the MTC UE 116 configured as a mobile telephone or smartphone, UEs could be configured to operate as other types of mobile or stationary devices.

FIGURE 3B illustrates an example eNB 103 according to this disclosure. The embodiment of the eNB 103 shown in FIGURE 3B is for illustration only, and other eNBs of FIGURE 1 could have the same or similar configuration. However, eNBs come in a wide variety of configurations, and FIGURE 3B does not limit the scope of this disclosure to any particular implementation of an eNB.

As shown in FIGURE 3B, the eNB 103 includes multiple antennas 370a-370n, multiple RF transceivers 372a-372n, transmit (TX) processing circuitry 374, and receive (RX) processing circuitry 376. The eNB 103 also includes a controller/processor 378, a memory 380, and a backhaul or network interface 382.

The RF transceivers 372a-372n receive, from the antennas 370a-370n, incoming RF signals, such as signals transmitted by UEs or other eNBs. The RF transceivers 372a-372n down-convert the incoming RF signals to generate IF or baseband signals. The IF or baseband signals are sent to the RX processing circuitry 376, which generates processed baseband signals by filtering, decoding, and/or digitizing the baseband or IF signals. The RX processing circuitry 376 transmits the processed baseband signals to the controller/ processor 378 for further processing.

The TX processing circuitry 374 receives analog or digital data (such as voice data, web data, e-mail, or interactive video game data) from the controller/processor 378. The TX processing circuitry 374 encodes, multiplexes, and/or digitizes the outgoing baseband data to generate processed baseband or IF signals. The RF transceivers 372a-372n receive the outgoing processed baseband or IF signals from the TX processing circuitry 374 and up-converts the baseband or IF signals to RF signals that are transmitted via the antennas 370a-370n.

The controller/processor 378 can include one or more processors or other processing devices that control the overall operation of the eNB 103. For example, the controller/processor 378 could control the reception of forward channel signals and the transmission of reverse channel signals by the RF transceivers 372a-372n, the RX processing circuitry 376, and the TX processing circuitry 374 in accordance with well-known principles. The controller/processor 378 could support additional functions as well, such as more advanced wireless communication functions. For instance, the controller/processor 378 could support beam forming or directional routing operations in which outgoing signals from multiple antennas 370a-370n are weighted differently to effectively steer the outgoing signals in a desired direction. Any of a wide variety of other functions could be supported in the eNB 103 by the controller/processor 378. In some embodiments, the controller/ processor 378 includes at least one microprocessor or microcontroller.

The controller/processor 378 is also capable of executing programs and other processes resident in the memory 380, such as a basic OS and operations for enhanced coverage transmission for long term evolution advanced communications systems to support of machine type communications. The controller/processor 378 can move data into or out of the memory 380 as required by an executing process.

The controller/processor 378 is also coupled to the backhaul or network interface 380. The backhaul or network interface 382 allows the eNB 103 to communicate with other devices or systems over a backhaul connection or over a network. The interface 382 could support communications over any suitable wired or wireless connection(s). For example, when the eNB 103 is implemented as part of a cellular communication system (such as one supporting 5G, LTE, or LTE-A), the interface 382 could allow the eNB 103 to communicate with other eNBs over a wired or wireless backhaul connection. When the eNB 103 is implemented as an access point, the interface 382 could allow the eNB 103 to communicate over a wired or wireless local area network or over a wired or wireless connection to a larger network (such as the Internet). The interface 382 includes any suitable structure supporting communications over a wired or wireless connection, such as an Ethernet or RF transceiver.

The memory 380 is coupled to the controller/processor 378. Part of the memory 380 could include a RAM, and another part of the memory 380 could include a Flash memory or other ROM.

As described in more detail below, the transmit and receive paths of the eNB 103 (implemented using the RF transceivers 372a-372n, TX processing circuitry 374, and/or RX processing circuitry 376) support downlink signaling for uplink and downlink adaptation in adaptively configured TDD systems.

Although FIGURE 3B illustrates one example of an eNB 103, various changes may be made to FIGURE 3B. For example, the eNB 103 could include any number of each component shown in FIGURE 3B. As a particular example, an access point could include a number of interfaces 382, and the controller/processor 378 could support routing functions to route data between different network addresses. As another particular example, while shown as including a single instance of TX processing circuitry 374 and a single instance of RX processing circuitry 376, the eNB 103 could include multiple instances of each (such as one per RF transceiver).

System information is divided into the Master Information Block (MIB) and a number of System Information Blocks (SIBs). The MIB includes a limited number of most essential and most frequently transmitted parameters that are needed to acquire other information from the cell, and is transmitted on BCH.

A logical channel that carries system information is referred to as Broadcast Control CHannel (BCCH). A BCCH is mapped to either a transport channel referred to as a Broadcast CHannel (BCH) or to a DL Shared CHannel (DL-SCH). A BCH is mapped to a physical channel referred to as Physical BCH (PBCH). A DL-SCH is mapped to PDSCH. A master information block (MIB) is transmitted using BCH, while other System Information Blocks (SIBs) are provided using DL-SCH. After a UE, such as UE 115, acquires a PCID for a cell, the UE 115 can perform DL channel measurements and use a CRS to decode PBCH and PDSCH.

A MIB uses a fixed schedule with a periodicity of forty (40) milliseconds (ms) and repetitions made within 40 ms. The first transmission of the MIB is scheduled in subframe #0 of radio frames for which the SFN mod 4 = 0, and repetitions are scheduled in subframe #0 of all other radio frames. A MIB includes a minimal amount of system information that is needed for UE 115 to be able to receive remaining system information provided by DL-SCH. More specifically, the MIB has a predefined format and includes information of DL operating bandwidth (3-bit), Physical Hybrid-ARQ Indicator Channel (PHICH, 3-bit), System Frame Number (SFN) (most significant bits (MSBs) 8-bit) and 10 spare bits that UE 115 can assume to have a predetermined value such as '0'. The UE 115 requires a PHICH configuration in order to be able to receive PDCCH which, in turn, is needed to receive DL-SCH. The PHICH configuration includes a number of groups used to transmit a PHICH and a number of OFDM symbols for a PHICH transmission (See REF3). A SFN includes 10 bits and the UE 115 can implicitly acquire the two least significant SFN bits by decoding a PBCH. A PBCH is transmitted over 6 Resource Blocks (RBs) in the middle of a DL operating BW and over four sub-frames in a successive respective four frames where each sub-frame is a first sub-frame of a respective frame and where each RB includes 12 sub-carriers, or Resource Elements (REs), and has a BW of 180 KHz. The 40 ms timing is detected blindly without requiring explicit signaling. Also, in each sub-frame, a PBCH transmission is self-decodable and UEs with good channel conditions are able to detect a PBCH in less than four sub-frames. Each individual PBCH transmission within a frame, from a period of four frames, is referred to as PBCH segment (See REF1 and REF2).

Most system information is included in different SIBs that are transmitted using DL-SCH. A presence of system information on a DL-SCH in a sub-frame is indicated by a transmission of a corresponding PDCCH conveying a codeword with a CRC scrambled with a System Information RNTI (SI-RNTI). SIB1 mainly includes information related to whether UE 115 is allowed to camp on a respective cell. In case of TDD, SIB1 also includes information about an allocation of UL/DL sub-frames and configuration of a special sub-frame (See also REF1). SIB1 uses a fixed schedule with a periodicity of 80 ms and repetitions made within 80 ms. The first transmission of SIB1 is scheduled in sub-frame #5 of radio frames for which the SFN mod 8 = 0, and repetitions are scheduled in sub-frame #5 of all other radio frames for which SFN mod 2 = 0. In addition to broadcasting, E-UTRAN is able to provide SIB1, including the same parameter values, via dedicated signaling, namely, within a *RRCConnectionReconfiguration* message. Transmission parameters for a SIB1 can vary and are signaled by a DCI format conveyed by an associated PDCCH.

SIBs other than SIB1 are carried in *SystemInformation* (SI) messages and a mapping of SIBs to SI messages is flexibly configurable by *schedulingInfoList* included in SIB1, with restrictions that: each SIB is contained only in a single SI message, only SIBs having the same scheduling requirement (periodicity) can be mapped to the same SI message, and SIB2 is always mapped to the SI message that corresponds to the first entry in the list of SI messages in *schedulingInfoList*. Multiple SI messages transmitted with the same periodicity can exist. The SI messages are transmitted within periodically occurring time domain windows (referred to as SI-windows) using dynamic scheduling. Each SI message is associated with a SI-window and the SI-windows of different SI messages do not overlap. That is, within one SI-window only the corresponding SI is transmitted. The length of the SI-window is common for all SI messages, and is configurable. Within the SI-window, the corresponding SI message can be transmitted a number of times in any sub-frame other than Multi-Broadcast Single Frequency Network (MBSFN) sub-frames, uplink sub-frames in TDD, and sub-frame #5 of radio frames for which SFN mod 2 = 0. The UE 115 acquires the detailed time-domain scheduling (and other information, such as frequency-domain scheduling, used transport format) from decoding SI-RNTI on PDCCH (See REF6).

SIB2 includes information for UEs to access a cell, such as an UL operating BW, random-access parameters, and parameters related to UL power control. SIB3-SIB13 mainly includes information related to cell reselection, neighboring-cell-related information, public warning messages, and the like.

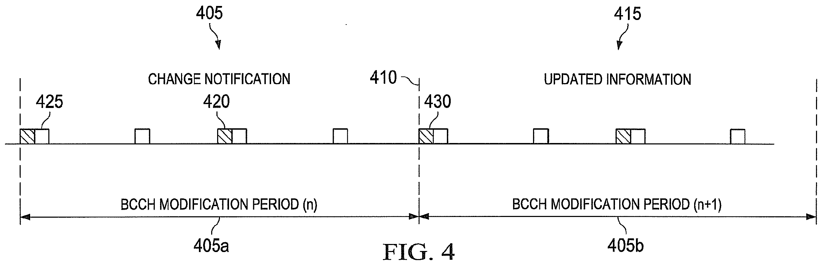

FIGURE 4 illustrates a change of system information according to this disclosure. The embodiment of the system information change is for illustration only. Other embodiments could be used without departing from the scope of this disclosure.

Change of system information 400 (other than for ETWS, CMAS and EAB parameters) only occurs at specific radio frames, namely, the concept of a modification period is used. System information can be transmitted a number of times with the same content within a modification period 405, as defined by its scheduling. The modification period boundaries 410 are defined by SFN values for which SFN mod m= 0, where m is the number of radio frames comprising the modification period. The modification period 405 is configured by system information.

When the network changes (some of the) system information, the network first notifies the UEs about the change, which can be done throughout a modification period 405a. In the next modification period 405b, the network transmits the updated system information 415. In the example shown in FIGURE 4, first elements 420 include different system information than second elements 425 and third elements 430 and second elements 425 contain different system information than third elements 430. Upon receiving a change notification 400, the UE 115 acquires the new system information, such as in third element 430, immediately from the start of the next modification period 405b. The UE 115 applies the previously acquired system information until the UE 115 acquires the new system information.

A Paging message is used to inform UEs in RRC_IDLE and UEs in RRC_CONNECTED about a system information change. If the UE 115 receives a Paging message including the *systemInfoModification,* UE 115 knows that the system information will change at the next modification period boundary 435. Although the UE 115 may be informed about changes in system information, no further details are provided, such as regarding which system information will change.

SystemInformationBlockType1 includes a value tag, *systemInfoValueTag,* that indicates if a change has occurred in the SI messages. UEs, such as UE 115, use *systemInfoValueTag,* to verify if the previously stored SI messages are still valid. For example, upon returning from out of coverage UE 115 uses *systemInfoValueTag* to verify if the previously stored SI messages are still valid. Additionally, the UE 115 considers stored system information to be invalid after 3 hours from the moment the SI message was successfully confirmed as valid, unless specified otherwise.

In certain embodiments, E-UTRAN does not update *systemInfoValueTag* upon change of some system information, such as, ETWS information, CMAS information, regularly changing parameters like time information (SystemInformationBlockType8, SystemInformationBlockType16), EAB parameters. Similarly, E-UTRAN does not include the *systemInfoModification* within the Paging message upon change of some system information.

The UE 115 verifies that stored system information remains valid by either checking *systemInfoValueTag* in SystemInformationBlockType1 after the modification period boundary 410, or attempting to find the *systemInfoModification* indication at least *modificationPeriodCoeff* times during the modification period 405 in case no paging is received, in every modification period 405. If no paging message is received by the UE 115 during a modification period 405, the UE 115 determines that no change of system information will occur at the next modification period boundary 410. If UE 115 in RRC_CONNECTED, during a modification period, receives one paging message, the UE 115 determines, from the presence/ absence of *systemInfoModification,* whether or not a change of system information other than ETWS information, CMAS information and EAB parameters will occur in the next modification period boundary 410.

ETWS capable UEs in RRC_CONNECTED attempt to read paging at least once every *defaultPagingCycle* to check whether ETWS notification is present or not. CMAS capable UEs in RRC_CONNECTED attempt to read paging at least once every *defaultPagingCycle* to check whether CMAS is present or not.

For an MTC UE, such as MTC UE 116, an already deployed radio access technology can be used in order to exploit economies of scale to control cost rather than create a new radio access technology specifically for MTC UEs. MTC UE 116 is supported in both FDD and TDD systems. MTC UE 116 typically requires low operational power consumption and is expected to communicate with infrequent small burst transmissions. In addition, MTC UE 116 is configured to be deployed deep inside buildings, which can require significant coverage enhancement relative to conventional cell coverage. Depending on a required coverage enhancement for MTC UE 116, the MTC UE 116 may or may not be configured in coverage enhancement mode.

Since MTC UE 116 can be installed in basements of residential buildings or, generally, in locations experiencing significantly larger propagation losses than conventional UEs, such as UE 115, MTC UE 116 can have characteristics such as very low data rate, greater delay tolerance, and no mobility, thereby potentially being capable to operate without some messages/channels. Required system functionalities for MTC UE 116 in an enhanced coverage operating mode are assumed to at least include synchronization, cell search, random access process, channel estimation, measurement reporting, and DL/UL data transmission. As coverage enhancements for physical channels consume additional resources and consequently result to lower spectral efficiency, it is possible to enable associated techniques only for MTC UEs that require such coverage enhancements.

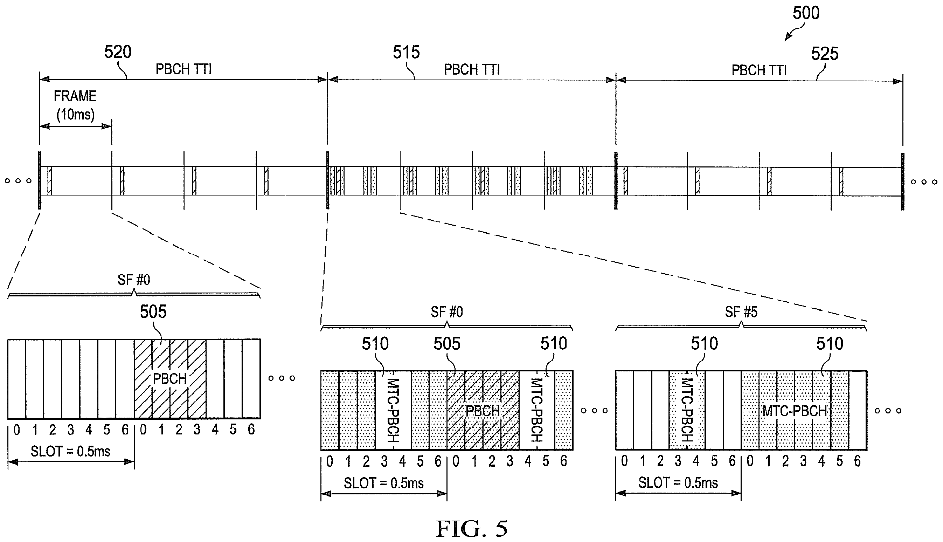

FIGURE 5 illustrates intermittent MTC PBCH transmissions 500 according to this disclosure. The embodiment of the MTC PBCH transmissions 500 shown in FIGURE 5 is for illustration only. Other embodiments could be used without departing from the scope of the present disclosure.

Coverage enhancements cannot be typically achieved without relying on extensive repetitions for a transmission of a respective channel. Such repetitions can result into a significant additional overhead as same information is transmitted in larger frequency or time resources compared to an operation where coverage enhancements are not required. When a PBCH for MTC UEs (MTC-PBCH), as a respective MIB that will be referred to as MTC-MIB, is not expected to frequently change, an overhead associated with MTC-PBCH repetitions for coverage enhancements can be mitigated by intermittently transmitting MTC-PBCH repetitions. For example, a MTC-PBCH can be repeated in every DL sub-frame of a frame for a period of 4 frames (following same transmission characteristics across 4 frames as a conventional PBCH) and then eNB 103 can suspend transmission for next 996 frames resulting to a periodicity of 1000 frames, or 10 seconds. However, an MTC UE cannot know in advance the frames where a MTC-PBCH is transmitted as the MTC UE does not know the SFN prior to detecting a MTC-PBCH. Then, on average, the MTC UE will be attempting MTC-PBCH detection for at least 5 seconds before being able to detect a MTC-PBCH, thereby incurring substantial power consumption in each attempt to detect the MTC-PBCH.

Repetitions of MTC-PBCH transmission need to be mapped to a set of available resources can be either predetermined or can be blindly determined by the MTC UE based on decoding outcomes for a predetermined set of hypotheses. In either case, similar to a conventional PBCH, a resource mapping needs to be defined for transmissions of MTC-PBCH repetitions in order for the MTC UE to be able to detect a MTC-PBCH. A PBCH transmission is one of MTC-PBCH repetitions if a MIB and a MTC-MIB carry same information. It is beneficial for a resource mapping of MTC-PBCH repetitions to enable a simple transmitter and receiver implementation, enable the MTC UE to determine whether transmissions of MTC-PBCH repetitions exist over a time period, and enable efficient mechanism to enhance coverage of a MTC-PBCH.

When a wireless transmission system, such as LTE, or an MTC UE, is operating in a coverage enhancement mode, modulated symbols of physical channels carrying system information are transmitted multiple times within a given time period in order to improve reception reliability particularly for UE 115 experiencing low signal-to-noise-and-interference-ratio (SINR) condition. The UE 115 operating in a coverage enhancement mode receives multiple copies of the modulated symbols and attempts to decode the information, such as by coherently combining the modulated symbols received at different times. For example, in order to deliver MIB content in a PBCH in a coverage enhancement mode, the network can repeat transmission of PBCH located in sub-frame#0 of a system frame multiple times in the same system frame.

Herein, the MTC PBCH is the repetition of the legacy PBCH that are transmitted by eNB 103 and received by the UE 115 operating in a coverage enhancement mode. However, in certain embodiments, the MTC PBCH does not repeat the legacy PBCH such as when the carried information is not identical. To ensure backward compatibility, a legacy PBCH is still transmitted by the eNB 103 in sub-frame #0 of every system frame.

Similarly, PDCCH/PDSCH, including their repetitions used for carrying SI messages that are transmitted for the UE 115 operating in a coverage enhancement mode, is a MTC PDCCH/MTC PDSCH or a MTC PDCCH/MTC PDSCH transmission block. The MTC PDCCH for scheduling the frequency location of a MTC PDSCH carrying a SI message in a subframe may not be needed if the frequency resource assigned the MTC PDSCH is predefined or is semi-statically configured, such as in a previous SIB such as SIB1. Unless stated otherwise, the MTC PDCCH and MTC PDSCH used for delivering SI messages are referenced as MTC PDCCH and MTC PDSCH respectively.

In order to reduce the transmission overhead of MTC PBCH, intermittent transmission of MTC PBCH can be performed by the network. For example, MTC PBCH can be transmitted for a consecutive 4 system frames for every M system frames, such as M=200ms, resulting in 4/20 = 20% of system frames containing MTC PBCH. Similarly, intermittent transmission of MTCPDCCH/PDSCH can be introduced to reduce the transmission overhead of MTC SI.

In the example shown in FIGURE 5, the intermittent MTC PBCH transmission 700 includes legacy PBCH 505 and MTC PBCH 510. The MTC PBCH 510 is transmitted in the 40ms period 515, but not in the period 520 and 525.

The purpose of each SIB and their applicability for UEs operating in enhanced coverage node is as follows:

SIB2: Since SIB2 contains essential system information, SIB2 is required.

SIB3/4/5: SIB3/4/5 are required for cell reselection. For UEs using coverage enhancement mode, RANI assumes close to stationary UEs. However, channel conditions may change due to the MTC UE being relocated or cells in which a MTC UE is camping on may be turned on or off at different time of the day (such as small cells). Without SIB3/4/5, the MTC UE can only rely on cell selection procedure which increases UE power consumption due to potentially long scanning. Therefore, it would be desirable to support cell reselection.

SIB6/7/8: SIB6/7/8 are required for inter-RAT cell reselection. One of the main purposes for introducing MTC for LTE is to reduce the number of RATs that the network operators needed to maintain in order to achieve network cost reduction. As such, SIB6/7/8 are not required for UE using coverage enhancement mode.

SIB9: SIB9 contains the Home eNB (HeNB) name. An MTC device can be installed at home, and SIB9 is used to show the HeNB name, such as to a user installing the MTC device. Since SIB9 is not strictly essential, SIB9 may not need to be coverage enhanced. However, this does not mean that the UE using enhanced coverage mode cannot attempt to decode the legacy SIB9.

SIB10/11/12: SIB10 and SIB11/12 are required for ETWS and CMAS notification, respectively, which may not be part of the use cases for a delay tolerant MTC device.

SIB 13/15: SIB 13 is required for MCH support and SIB 15 is required for MBMS service continuity. UEs requiring coverage enhancement would not be able to receive the legacy PMCH reliably. As such, SIB13 and SIB15 may not be required for UEs using enhanced coverage mode.

SIB14: SIB14 contains EAB parameters. As MTC is mainly for delay tolerant applications, SIB14 can be received by UEs using enhanced coverage mode.

SIB16: SIB16 contains timing information related to GPS and Coordinated Universal Time. This could be useful for applications requiring accurate timing information. However, SIB16 is not strictly essential; therefore SIB16 may not be needed for UE using enhanced coverage mode.

In general, for SIBs that are identified as essential for UEs using coverage enhancement mode, the SIBs should be coverage enhanced so that the UEs concerned can receive the SIBs reliably. However, the UE is not prohibited from attempting to receive the other SIBs.

Embodiments of the present disclosure describe a network that can deliver system information to a UE operating in a coverage enhancement mode. The UE operating in a coverage enhancement mode can be either a MTC UE or a conventional UE. Herein, such UE is referenced as an MTC UE 116

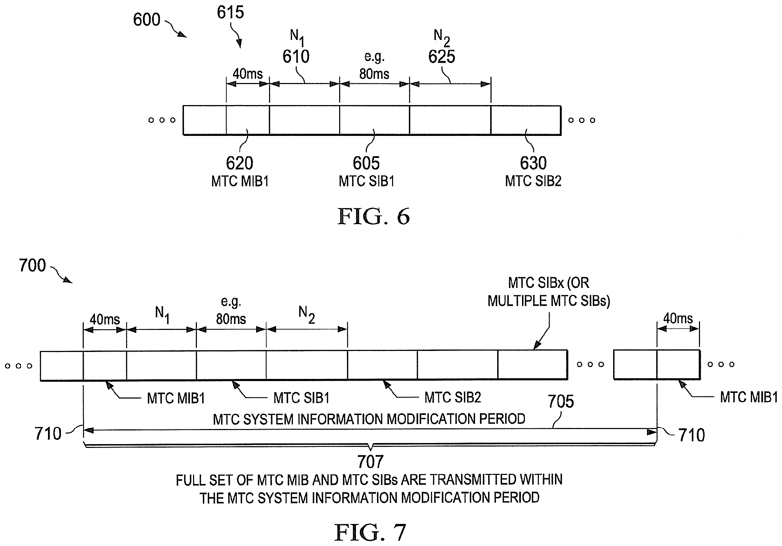

FIGURE 6 illustrates Transmissions 600 of MTC MIB, MTC SIB1 and MTC SIB2 over time according to this disclosure. The embodiment of the transmissions 600 shown in FIGURE 6 are for illustration only. Other embodiments could be used without departing from the scope of the present disclosure.

Embodiment 1 - MTC system information transmission frame structure:

In one method of MTC system information transmission frame structure, the intermittent transmission periods of MTC PBCH, MTC PDCCH, and MTC PDSCH do not overlap in time. In particular, two consecutive transmissions of MTC SI (including MIB, and all SIBs for MTC) are separated by at least N number of system frames, where $N$ can be 0, 10, 20, and so forth. If $N > 0$, the DL physical resource of the $N$ separation system frames can be used for other purposes, such as serving the other UEs. The non-zero time gap between two MTC SI transmissions also provides for sufficient time for the UE to decode the first SI before receiving the next one. Furthermore, if MTC PDCCH is defined, the time gap also enables the MTC PDCCH to be transmitted by the network. Larger N allows more resources to be available for other usage but at the same time causes more delay for MTC UEs in acquiring system information. Herein, the MIB transmitted in MTC PBCH is referenced as MTC MIB, and the SIBs transmitted in MTC PDSCH are referenced as MTC SIBs.

In one option of the method of MTC system information transmission frame structure when the intermittent transmission periods of MTC PBCH, MTC PDCCH, and MTC PDSCH do not overlap in time, MTC SIB 1 605 is transmitted after a fixed and predefined number ($N_1$) 610 of system frames from the last frame of MTC PBCH 615. In another option, $N_1$ 610 is configurable by the network, such as by using MTC MIB 620, to allow for network flexibility. In certain embodiments, another equivalent parameter is used, such as $N_1'$ sub-frames from the first frame of MTC PBCH (namely, $N_1'$ = $N_1$ + 40ms). The period of MTC SIB1 605 transmission can be predefined, for example - 80ms, to match the same periodicity of the legacy SIB1. Similarly, the SI message following MTC SIB1 605 transmission is transmitted after $N_2$ 625 frames from the last frame containing MTC SIB1 605. The value of $N_2$ 625 may or may not be the same as $N_1$ 610. In certain embodiments, the value of $N_2$ 625 is fixed and predefined. In certain embodiments, the value of $N_2$ 625 is configurable, such as by using MTC SIB 1 605.

In the example shown in FIGURE 6, it is assumed that the first MTC SI message after MTC SIB1 605 transmission carries only MTC SIB2 630. In certain embodiments, multiple MTC SIBs are mapped to the same MTC SI message. However, it is advantageous to restrict the first MTC SI message after MTC SIB 1 605 to carry only MTC SIB2 610 since MTC SIB2 610 contains essential information for initial access and the essential information is expected not to change frequently. Alternatively, the first MTC SI message after MTC SIB1 605 is configured to carry both MTC SIB2 630 and MTC SIB14 as both can be considered important information for initial access purposes. However, combining MTC SIB2 630 and MTC SIB14 in the same SI message can inhibit a frequent changing of MTC SIB14.

Note that the region indicated for each MTC SI transmission in the example shown in FIGURE 6 defines a start and end of where the MTC SI transmission is performed, but does not necessarily imply all sub-frames within the region are used for MTC SI transmission. For example, the MTC MIB1 620 region indicated in FIGURE 6 corresponds to the period 515 in FIGURE 5. Although the other MTC SI messages are not shown, similar principles can be extended to the other MTC SIs, which are transmitted after a number of frames from the last frame of the first MTC SI message, which carries MTC SIB2 (+MTC SIB14), after MTC SIB1 transmission. The order of transmissions for the other SI messages (SIBs) can be determined from scheduling information in MTC SIB 1 605.

FIGURE 7 illustrates MTC MIB and MTC SIBs within a MTC system information modification period according to this disclosure. The embodiment of the transmission 700 shown in FIGURE 7 is for illustration only. Other embodiments could be used without departing from the scope of the present disclosure. In the example shown in FIGURE 7, the transmission 700 includes a MTC system information (SI) modification period 705.

In another design component of this method of MTC SI transmission frame structure when the intermittent transmission periods of MTC PBCH, MTC PDCCH, and MTC PDSCH do not overlap in time, the entire system information for MTC 707 is transmitted within the MTC SI modification period 705. The MTC UE 116 attempts to receive all the MTC SI within a MTC SI modification period 705, such as when performing initial access. Similar to the legacy SI modification period, the change of MTC system information, with possible exception of Extended Access Barring (EAB) parameters, only occurs at the boundary 710 of the MTC system information modification period. The MTC SI modification period boundaries 710 are defined by System Frame Number (SFN) values for which SFN mod $m$ = 0, where $m$ is the number of radio frames comprising the MTC SI modification period 705. The MTC system information modification period 705 is configured by system information.

In one approach, the MTC SI modification period 705 is configured the same as the legacy SI modification period, which is determined by the modification period coefficient (*modificationPeriodCoeff*) and the default paging cycle (*defaultPagingCycle*) according to Equation 1:

$$\text{SI modification period} = modificationPeriodCoeff * defaultPagingCycle \qquad (1)$$

In Equation 1, *modificationPeriodCoeff* and *defaultPagingCycle* are indicated by the network in the legacy SIB2 (the possible range for MTC SI modification period 705 is 640ms to 10.24s). The same parameters are also transmitted in MTC SIB2 630.

In another approach, when a need exists to distribute an MTC SI transmission overhead over time by a means of increasing the length of the MTC SI modification period 705, two separate SI modification periods can be utilized based on whether the UE is operating in a coverage enhancement mode. A first SI modification period 705 is configured for UEs not operating in a coverage enhancement mode and a second SI modification period 705 is configured for UEs operating in a coverage enhancement mode.

In one option of the second approach, there are separate *modificationPeriodCoeff* or *defaultPagingCycle* parameters that can be configured in MTC SIB2 630. Typically, the *modificationPeriodCoeff* and *defaultPagingCycle* parameters are configured such that the MTC SI modification period 705 is greater than the legacy SI modification period.

In another option of the second approach, a multiplier, $\alpha$, is included in MTC SIB2 630. In this option, the SI modification period for MTC is as illustrated in Equation 2:

$$modificationPeriodCoeff * defaultPagingCycle * \alpha; \text{where } \alpha = \{2, 4, 6, \ldots \quad \}$$

$$(2)$$

In another option of the second approach, the range of *modificationPeriodCoeff* and *defaultPagingCycle* values in MTC SIB2 630 can be redefined to cover larger values.

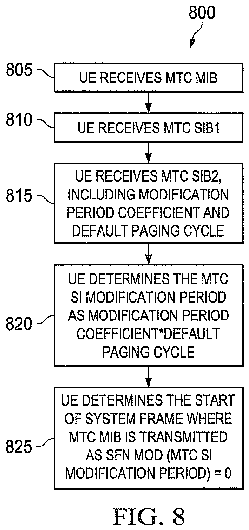

FIGURE 8 illustrates UE procedure 800 to determine MTC PBCH intermittent transmission pattern according to this disclosure. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a transmitter chain in, for example, a UE or MTC UE.

In one example design, the MTC MIB (PBCH) is first transmitted within the MTC SI modification period. In particular, the first frame or the first frame of the MTC SI modification period plus a predefined sub-frame or frame offset is the first frame of the MTC PBCH. This allows the MTC UE 116 to determine the MTC PBCH intermittent transmission pattern over time from the MTC SI modification period configuration. The MTC UE 116 receives the MTC MIB in step 805. Thereafter, the MTC UE 116 also receives the MTC SIB1 in step 810. In step 815, MTC UE 116 receives the MTC SIB2, which includes a modification period coefficient and default paging cycle. Thereafter, the MTC UE 116 determines the MTC SI modification period as modificationPeriodCoeff * defaultPagingCycle in step 820. In step 825 the MTC UE 116 determines the start of system frame where the MTC MIB is transmitted as SFN mod (MTC SI modification period) = 0. In particular, the starting frame of the MTC PBCH transmission is determined as SFN mod (MTC SI modification period) = 0. Alternatively, the starting frame of the MTC PBCH transmission is determined as SFN mod (MTC SI modification period) = offset.

In order to reduce the handover delay for UEs, MTC *modificationPeriodCoeff* and MTC *defaultPagingCycle* of the target cell for handover can be included in the handover command so that the MTC UE 116 is able to determine the starting time of MTC MIB transmission. This enables UE power saving by avoiding to scan frequently for MTC PBCH of the target cell.

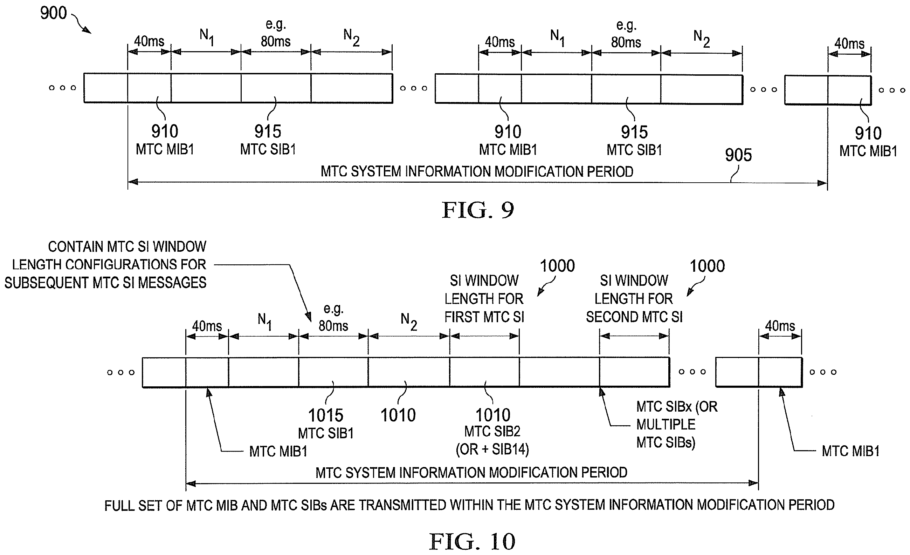

FIGURE 9 illustrates multiple transmissions of MTC SI within the MTC SI modification period according to this disclosure. The embodiment of the transmission 900 shown in FIGURE 9 is for illustration only. Other embodiments could be used without departing from the scope of the present disclosure. In the example shown in FIGURE 9, the transmission 900 includes a single or periodic MTC SI transmission block.

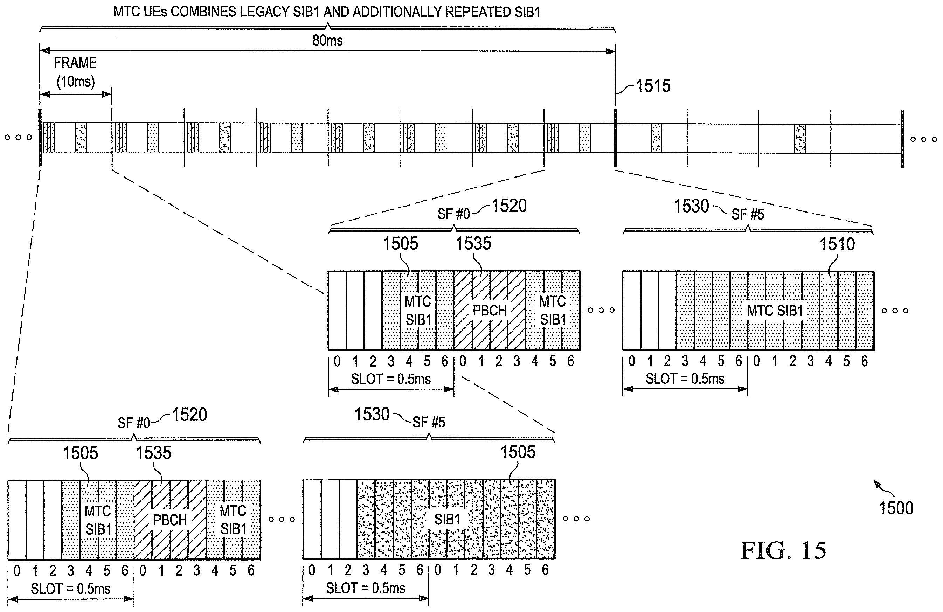

In yet another design component of this method of MTC SI transmission frame structure when the intermittent transmission periods of MTC PBCH, MTC PDCCH, and MTC PDSCH do not overlap in time, only one transmission block of MTC PBCH, MTC PDSCH for each SIB is included within a MTC SI modification period 905. For a given MTC SI modification period 905, this option allows lower MTC SI transmission overhead. Alternatively, multiple transmission blocks of the same MTC SI can be transmitted within a MTC SI modification period 905, such as in a periodic manner. In the example shown in FIGURE 9, the transmission 900 includes multiple transmission blocks of the same MTC SI, where only MTC MIB 910 and MTC SIB1 915 are shown for simplicity. For example, the starting frame of MTC PBCH is determined as SFN mod (MTC SI modification period) = 0; and the repeated block of MTC PBCH is determined as SFN mod (4Y) = 0, where Y is a positive integer that can be predefined or fixed, for example, Y = 8, 10, 100, 1000, and so forth. The MTC SIB1 915 transmission period can be determined as SFN mod 8*P = N, where P > 0, e.g. P = 2,3,4,10, 100, 1000, and so forth, and N > 0, for example, N=4, 8, and so forth (other options are given in Embodiment 6 - MTC SIB1 transmission, with respect to FIGURE 15).

In yet another alternative, a set of MTC SI is only transmitted once within a MTC SI modification period 905 while another set of MTC SI is transmitted multiple times within the MTC SI modification period 905. In one example of this alternative, MTC PBCH, MTC PDSCH transmission block carrying SIB1 and SIB2 is transmitted multiple times within a MTC SI modification period 905 in a periodic manner, while the rest of SI is transmitted once within the same period. Transmitting a first set of MTC SI carrying SIB1 and SIB2 multiple times and the rest of SI one time and another within the same MTC SI modification period 905 is advantageous to provide better reliability for the essential SI. In another example of this alternative, MTC PBCH, MTC PDSCH transmission block carrying SIB1 and SIB2 is transmitted once within a MTC SI modification period 905, while the rest of SI is transmitted multiple times within the same period in a periodic manner. Transmitting a first set of MTC SI carrying SIB1 and SIB2 one time and the rest of the SI multiple times within the same MTC SI modification period 905 is advantageous if certain SI messages (other than MIB, SIB1, and SIB2) contain a larger payload size. Therefore multiple transmissions of these SIBs can enhance their coverage.

Change of MTC SI content

In legacy networks, a UE may assume that within one SI window the repetitions relate to unchanged contents. However, in general, the UE may not assume that the SI content does not change across SI windows.
To enable MTC UEs, such as MTC UE 116, to soft combine MTC SI transmissions across SI windows, in one approach, the MTC UE 116 is configured to assume that, upon detection of MTC PBCH, the MTC SI content does not change across SI windows within the same MTC SI modification period. Assuming the MTC SI content does not change across SI windows within the same MTC SI modification period is also beneficial for a scheme where MTC UE 116 combines the SI messages within the SI or BCCH modification period where the SI transmission is as per Rel-11 LTE specification, except that the SIBs transmitted within the same modification period can assumed by MTC UE 116 to be the same to facilitate soft combining. Note that in one option this assumption of unchanged SI content may only be valid in a modification period where MTC SI messages are transmitted, namely, in other modification periods where MTC SI messages are not transmitted, certain SIBs, such as SIB1, SIB14 can change across SI windows as per Rel-11. In another approach, a one bit indication can be included in, for example, MTC SIB1 to indicate that the MTC SI content does not change across SI windows within the same MTC SI modification period.

MTC SI resources allocation

The total number of information bits of SIBs varies depending upon the actual network configuration. Table 1 shows an example of the sizes of MIB and SIBs. The size of a typical SIB and the maximum size of the same SIB can be quite different. The same may be applicable to MTC SIBs. This implies that there is advantage and a need in allowing the network some flexibility in configuring the total amount of the resources used for MTC SIBs in order to ensure similar reception reliability for different sizes of SIBs.

Table 1: Sizes of MIB and SIBs

| SI | Bits | | NOTE |
|---|---|---|---|
| | **Typical** | **Max** | |
| MIB | 24 | 24 | |
| SIB1 | ~200 | 808 | |
| SIB2 | ~240 | 712 | |
| SIB3 | ~120 | 184 | |
| SIB4 | ~40 | 120 | |
| SIB5 | ~400 | 5896 (but capped to 2216 bits due to the limit of DCI format 1A) | Assumption for typical: 4 frequencies. |

FIGURE 10 illustrates MTC SI window 1000 length according to this disclosure. The embodiment of the MTC SI window 1000 shown in FIGURE 10 is for illustration only. Other embodiments could be used without departing from the scope of the present disclosure.

In one approach, the MTC SI window 1000 is defined for MTC SI messages (in which being the same as the legacy SI window is not precluded). The MTC SI window 1000 defines the time window in which the MTC PDSCH carrying the MTC SIB(s) is repeated. For example, if the first MTC SI message is transmitted $N_2$ sub-frames 1010 after the end of MTC SIB1 1015 transmission, the MTC SI window 1000 starts after $N_2$ sub-frames 1010 from the end of MTC SIB1 1015 transmission. The MTC SI window 1000 length can be predefined and fixed or can be configurable by the network. Whether the MTC SI window length is fixed or configurable can also depend on the SIB type carried by a SI message. For example, MTC PDSCH for MTC SIB 1 1015 can be assumed to have a fixed SI window length, while the window length for other MTC SI messages can be configurable by the network, such as by using MTC SIB1. Some examples of the MTC SI window length are {5ms, 10ms, 15ms, 20ms, 40ms, 80ms, 120ms, and so forth}. In one alternative of this approach, the MTC SI window length is common for all MTC SI messages. In another alternative of this approach, different MTC SIB may be configured with different MTC SI window 1000 lengths. This is advantageous since the size of different MTC SI can be different and MTC SI with large transport block size needs longer window length.

In addition, if a MTC SI message transmission block can be repeated more than one time within a MTC SI modification period, a MTC SI periodicity can be defined to specify the periodicity of the transmission block within a MTC SI modification period.

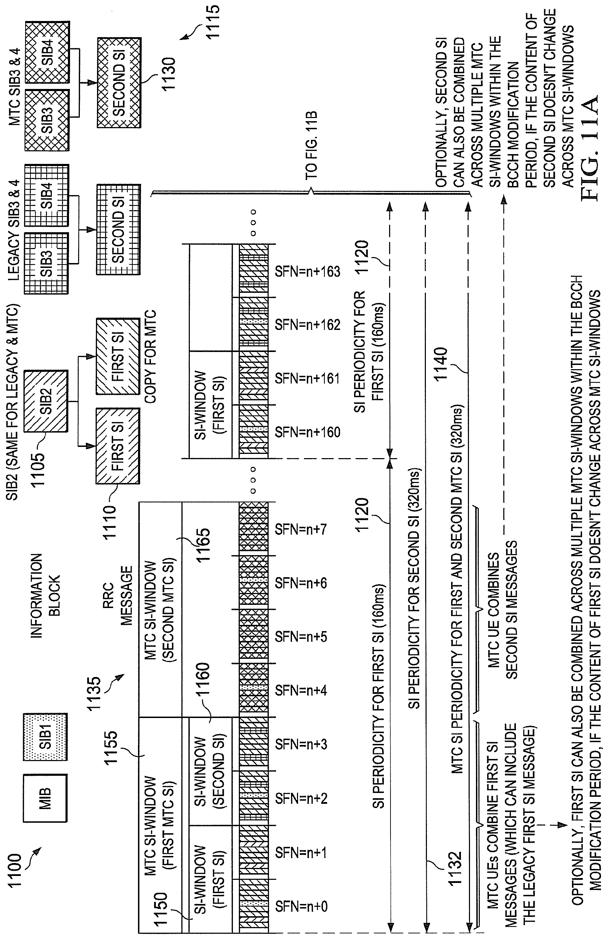

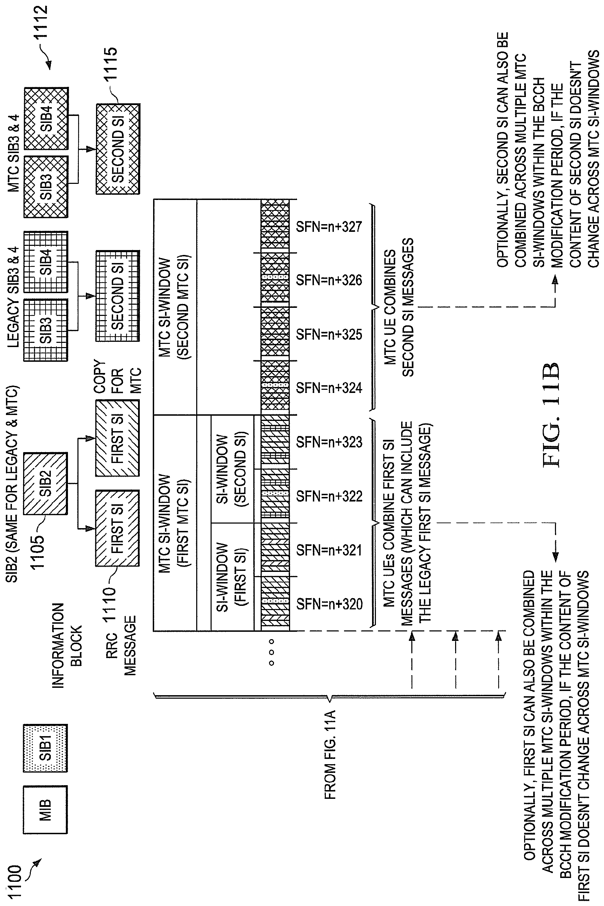

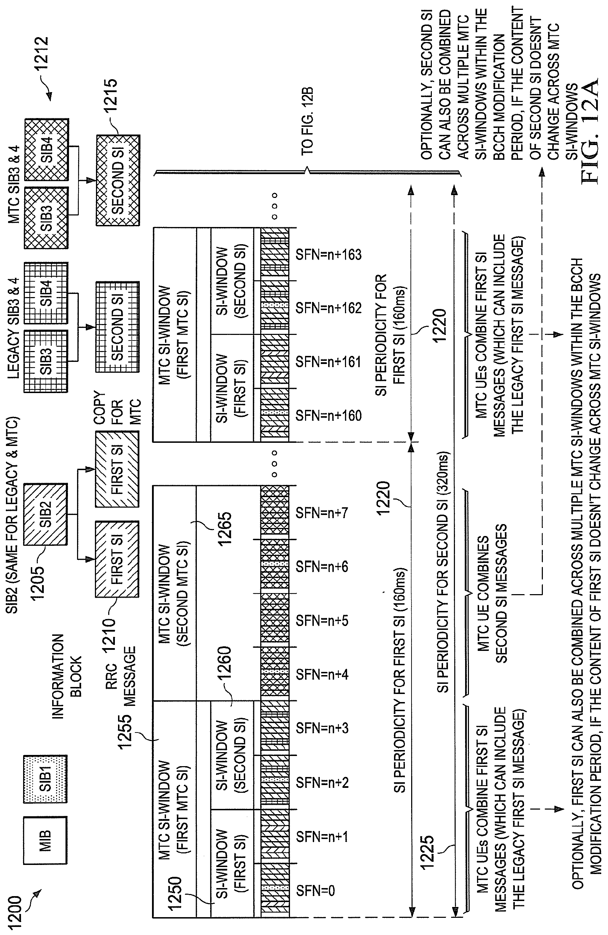

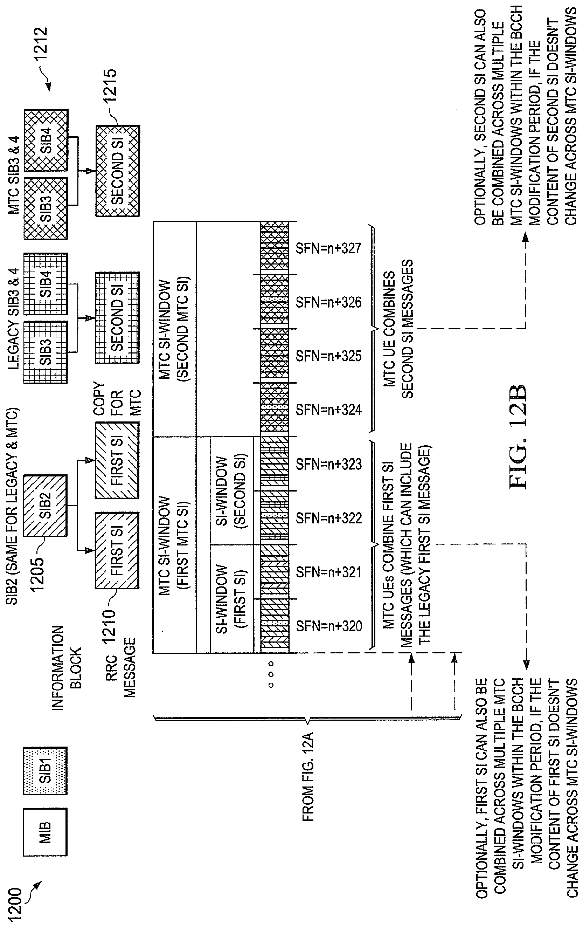

FIGURE 11 illustrates separate SI window length and SI periodicity for MTC UEs according to this disclosure. FIGURE 12 illustrates separate SI window length but same SI periodicity as legacy SI periodicity for MTC UEs according to this disclosure. The embodiments of the transmissions 1100, 1200 shown in FIGURES 11 and 12 are for illustration only. Other embodiments could be used without departing from the scope of this disclosure.

As a special case of method described in this embodiment, the procedure to determine the start of a MTC SI window can be the same as that of the legacy SI window except that the legacy SI periodicity is replaced by the MTC SI periodicity and the legacy SI window is replaced by the MTC SI window for the MTC UEs (See REF7). Additional repetitions of SI messages are transmitted by the eNB 103 to meet the coverage enhancement requirement of MTC UEs. Additional restriction can be introduced such that the network and the UE 115, or MTC UE 116, do not assume MTC SI messages are transmitted in a sub-frame or SI window period in which the MTC PBCH or MTC SIB1 is expected. The MTC SI window length and the MTC SI periodicity can be the same as the legacy SI window length (*si-WindowLength*) and SI periodicity (*si-Periodicity*) (See REF7), respectively, namely, SI windows for MTC and legacy UEs completely overlap, and the legacy SI messages can also form part of the MTC SI messages in a similar way as MTC PBCH. Otherwise, a separate MTC SI window length and a separate MTC SI periodicity are configured for MTC SI messages, such as in MTC SIB1, in which case, the legacy SI messages are not necessarily part of the MTC SI messages. This option allows for more repetitions that can be accommodated by the legacy SI window length while allowing flexible SI overhead control with separate SI periodicity for MTC UEs. In this option, it is possible that certain legacy SI-window can be located within a MTC SI-window (e.g. the first portion of a MTC SI-window) and certain legacy SI messages can form part of the MTC SI messages as well.

An example of this option is illustrated in FIGURE 11. The legacy SI window is 20ms and the MTC SI window is 40ms. In this example, SIB2 1105 is mapped to the 1st SI message 1110, while SIB3 and SIB4 1115 are mapped to the 2nd SI message 1130. The SI periodicity 1120 of the 1st legacy SI message is 160ms and the legacy SI periodicity 1132 of the 2nd SI message 1130 is 320ms. The SI periodicity 1140 of the 1st MTC SI message 1110 and 2nd MTC SI message 1130 is 320ms.

It is also possible that the MTC SI window length can be different from the legacy SI window length, such as MTC SI window length is longer, and the MTC SI periodicity can still be the same as the legacy SI periodicity. This allows for more repetitions that can be accommodated by the legacy SI window length. It is possible that certain legacy SI-window can be located within a MTC SI-window, such as the first portion of a MTC SI-window, and certain legacy SI messages can form part of the MTC SI messages as well.

An example is illustrated in FIGURE 12. The legacy SI window is 20ms and the MTC SI window is 40ms. In this example, SIB2 1205 is mapped to the 1st SI message 1210, while SIB3 and SIB4 1212 are mapped to the 2nd SI message 1215. The SI periodicity 1220 of the 1st SI message 1210 is 160ms and the SI periodicity 1225 of the 2nd SI message 1215 is 320ms.

Referring to FIGURE 11, the information content in SIB2 1105 is the same for both the legacy SIB2 and the MTC SIB2. It is also possible that the information contents for the legacy SIB2 and the MTC SIB2 are different. For the normal UE, the 1st SI messages 1110 are repeated in a legacy SI window 1150 (SFN=n & SFN=n+1); for the MTC UEs, the 1st SI messages 1110 are repeated in a MTC SI window 1155 (SFN=n to n+3) and the MTC UE 116 can combine these repeated messages, which can include the 1st SI message 1110 transmitted for the normal UE 115. This is possible because the legacy SI window 1150 and the MTC SI window 1155 for the 1st SI message 1110 have overlapping region and if the 1st SI message 1110 for both the normal UE 115 and the MTC UE 116 is the same. For the legacy SI message to be reused as part of the MTC SI message, the network also has to schedule them in the same time and frequency resources. It should be noted that the MTC UE 116 need not be aware of whether the legacy SI message is also part of the MTC SI message. Hence, the network also has the freedom to schedule the legacy SI message and the MTC SI message separately in a subframe. For the 2nd SI message 1135, the legacy SI window 1160 is SFN=n+2 and SFN=n+3; whereas the MTC SI window 1165 is SFN=n+4 to n+7, that is, the legacy SI window 1160 and the MTC SI window 1165 do not overlap, in which case the legacy SI message is not reused as part of the MTC SI message. There is an advantage to reuse the legacy SI message as MTC SI message for SIB2 1105 but not for SIB3, 4, 5, and so forth. The information in SIB2 1105 for the normal UE 115 and MTC UE 116 is typically the same; however the information in SIB3, 4, 5, and so forth, for the MTC UE 116 can be different or reduced compared to that for the normal UE 115 because not all cells or frequencies can support the coverage enhancement feature. In addition, in general there can also be a gap between the MTC SI window 1155 for the 1st SI and the MTC SI window 1135 for the 2nd SI, such as by introducing an offset. Finally, note that combining across MTC SI windows (within the MTC SI modification period) is also possible if the MTC SI message content does not change across MTC SI windows. However, if the MTC SI message content can change across MTC SI windows, combining across MTC SI windows is not allowed. As mentioned previously, a one bit indication can be included in, for example, MTC SIB1 or detection of MTC PBCH can be used to indicate that the MTC SI content shall not change across SI windows within the same MTC SI modification period.

Referring to FIGURE 12, the information content in SIB2 1205 is the same for both the legacy SIB2 and the MTC SIB2. It is also possible that the information contents for the legacy SIB2 and the MTC SIB2 are different. For the normal UE 115, the 1st SI messages 1210 are repeated in a legacy SI window 1250 (SFN=n & SFN=n+1); for the MTC UEs, the 1st SI messages 1210 are repeated in a MTC SI window 1255 (SFN=n to n+3) and the MTC UE 116 can combine these repeated messages, which can include the 1st SI message 1210 transmitted for the normal UE 115. This is possible because the legacy SI window 1250 and the MTC SI window 1255 for the 1st SI message 1210 have an overlapping region and if the 1st SI message 1210 for both the normal UE 115 and the MTC UE 116 is the same. For the legacy SI message to be reused as part of the MTC SI message, the network also has to schedule them in the same time and frequency resources. It should be noted that the MTC UE 116 need not be aware of whether the legacy SI message is also part of the MTC SI message. Hence, the network also has the freedom to schedule the legacy SI message and the MTC SI message separately in a sub-frame. For the 2nd SI message 1215, the legacy SI window 1260 is SFN=n+2 and SFN=n+3; whereas the MTC SI window 1265 is SFN=n+4 to n+7, that is, the legacy SI window 1260 and the MTC SI window 1265 do not overlap, in which case the legacy SI message is not reused as part of the MTC SI message. There is an advantage to reuse the legacy SI message as MTC SI message for SIB2 1205 but not for SIB3, 4, 5, and so forth. The information in SIB2 1205 for the normal UE 115 and MTC UE 116 is typically the same; however the information in SIB3, 4, 5, and so forth, for the MTC UE 116 can be different or reduced compared to that for the normal UE 115 because not all cells or frequencies can support the coverage enhancement feature. In the example shown in FIGURE 12, MTC MIB and MTC SIB1 are not shown for brevity. Finally, note that combining across MTC SI windows (within the MTC SI modification period) is also possible if the MTC SI message content does not change across MTC SI windows. However, if the MTC SI message content can change across MTC SI windows, combining across MTC SI windows is not allowed. As mentioned previously, a one bit indication can be included in, for example, MTC SIB1 or detection of MTC PBCH can be used to indicate that the MTC SI content shall not change across SI windows within the same MTC SI modification period.

In certain embodiments, the MTC SIB 1 includes a fixed SI window length, such as 80ms. The set of sub-frames used for MTC SIB1 within the fixed SI window length is assumed to be predefined. The frequency resources can be either predefined or scheduled by MTC PDCCH. Alternatively, the resources for MTC SIB1 (SI window length and/or PRBs) can be indicated in MTC MIB. In the case where the total amount of MTC SIB 1 resources are fixed, the results can be a fixed total amount of resources for MTC MIB and MTC SIB1, while the resources allocated for the rest of the MTC SIBs can be configured by the network through MTC SI window length(s) and/or MTC PDCCH(s), and or MTC SI periodicity(ies). Further details about MTC SIB1 can be found in Embodiment 6 (discussed herein below with reference to FIGURE 15).

UE Procedure for acquiring MTC system information

One example of UE procedure to acquire MTC system information 1300 can be the following:

Step 1: MTC UE 116 detects MTC PBCH transmitted from eNB 103.
Step 2: the MTC UE 116 determines the start time for MTC PDSCH carrying SIB1 (for example, a first sub-frame after $N_1$ system frames from the end of MTC PBCH transmission period) as well as the MTC SIB1 transmission window as 80ms. If MTC PDCCH is defined, MTC UE 116 determines the frequency location of MTC PDSCH from MTC PDCCH; otherwise the frequency location of MTC PDSCH is predefined and known to the MTC UE 116 beforehand.
Step 3: the MTC UE 116 receives MTC SIB1, which includes information about the starting time to receive MTC SIB2 and the other MTC SIBs. The MTC UE 116 receives the MTC SI window length(s) (and MTC SI periodicity) of each MTC SI messages and receives information regarding how MTC SIBs are mapped to each MTC SI message.

In particular, given the mapping of MTC SIBs to MTC SI messages, the start of the MTC SI-window for each MTC SI message can be determined as follows:

1> determine the start of the MTC SI-window for the concerned MTC SI message as follows:

2> for the concerned SI message, determine the number n that corresponds to the order of entry in the list of SI messages configured by *schedulingInfoList* in MTC *SystemInformationBlockType1;*

Example of Alt1 (one transmission block for each SI message within modification period):

2> determine the integer value $x = (n - 1)*w$, where w is the MTC *si-WindowLength;*

2> the SI-window starts at the subframe #*a,* where $a = x$ mod 10, in the radio frame for which SFN mod MTC *modificationPeriod* = *rfOffset1* +*rfOffset2*n,* where *rfOffset1* is a first SI radio frame offset (such as $N_1$ + 40ms) and *rfOffset2* is a second SI radio frame offset ($N_2$) [here, both *rfOffset1* and *rfOffset2* are assumed common for all SI messages. The zero value for *rfOffset2* results in back-to-back SI transmissions];

Example of Alt2 (multiple transmission blocks for each SI message within mod period):

2> determine the integer value $x = (n - 1)*w$, where w is the MTC *si-WindowLength;*

2> the SI-window starts at the subframe #*a,* where $a = x$ mod 10, in the radio frame for which SFN mod MTC *modificationPeriod* = *rfOffset1* +*rfOffset2*n+t*rfOffset2*N,* where t = 0... (floor(MTC *modificationPeriod* - *rfOffset1* )/T)-1 and T is the MTC *si-Periodicity* of the concerned SI message and N is the total number of SI messages (maximum of n);

Example of Alt3 (multiple transmission blocks for each SI message within mod period):

2> determine the integer value $x = (n - 1)*w$, where w is the *MTC si-WindowLength;* and

2> the SI-window starts at the subframe #*a,* where $a = x$ mod 10, in the radio frame for which SFN mod $T$ = FLOOR($x$/10), where $T$ is the *MTC si-Periodicity* of the concerned SI message.

MTC SIB1 also indicates PRB-pairs to receive subsequent SIBs if MTC PDCCH is not defined.

Step 4: the MTC UE 116 receives MTC PDSCH carrying SIB2 (and SIB14) in a determined time from Step 3. If MTC PDCCH is defined, the MTC UE 116 determines the frequency location of MTC PDSCH from MTC PDCCH; otherwise the frequency location of MTC PDSCH is predefined and known to the MTC UE 116 beforehand.

Step 5: the MTC UE 116 determines the MTC SI modification period as well as the next start time of MTC MIB transmission from the MTC modification coefficient and MTC default paging cycle configuration in MTC SIB2.

Step 6: the MTC UE 116 repeats Step 3 to receive the remaining MTC SIBs.

### Embodiment 2: MTC SIBs

The content of MTC SIBs is the same as the content of the SIBs transmitted for UEs not configured in enhanced coverage mode except for MTC SIB5. This is because the size of legacy SIB5 may exceed the maximum signaling processing capability of a certain MTC UE category, for example, a maximum of transport block bits for MTC UE category (such as Category 0) can be defined to be 1000 bits and the maximum size of SIB5 can be 2216 bits as shown in Table 1.

Therefore, in certain embodiments, a new SIB5 for MTC, referenced as SIB17, is defined for UEs configured or operating in enhanced coverage mode or Category 0 UE. SIB17 is a reduced-size legacy SIB5 and the size reduction can be achieved by reducing the number of frequencies and cells applicable for inter-frequency cell re-selection for UEs configured/operating in enhanced coverage mode. The MTC UE 116 configured with enhanced coverage mode or Category 0 UE skips SIB5 reception and acquires the new SIB17 instead. The cells or frequencies indicated in the new SIB 17 only indicate the cells or frequencies that support coverage enhancement operation and/or Category 0 UE operation.

In one example, the cells or frequencies that support coverage enhancement operation and Category 0 UE operation is the same, that is, the cells or frequencies that support coverage enhancement operation shall also support Category 0 UE operation and vice versa. In another example, the cells or frequencies that support coverage enhancement operation and Category 0 UE operation may be different and are separately signaled.

Embodiment 3: Timing

Due to the need to repeat PDSCH transmission for enhanced coverage mode, there is a need to define the timing for HARQ procedure, random access procedure, timing advance procedure. The MTC UE 116 starts to transmit HARQ-ACK in sub-frame n+4 after the last MTC PDSCH sub-frame of a MTC PDSCH transmission block. The MTC UE 116 starts to transmit Msg3 in the first sub-frame n+k, k>=6, after the last sub-frame carrying random access response (RAR). The MTC UE 116 starts to transmit PRACH in the first sub-frame n+k, k>=6, after the last sub-frame of PDCCH order. The start of RAR window is defined to be the end of the last PRACH transmitted plus 3 sub-frames (See also, sec 5.1.4 of 36.321). A longer RAR window can be configured for UEs operating in enhanced coverage mode. The MTC UE 116 adjusts timing advance in the first sub-frame n+k, k>=6, after the last sub-frame of TA command. The MTC UE 116 may successfully receive MTC PDSCH, MTC PDCCH order before the end of the MTC PDSCH and MTC PDCCH order transmission block. To ensure common understanding of the eNB 103 and the MTC UE 116 on the UE transmission timing, the last sub-frame referred to above is the last transmission sub-frame of MTC PDSCH transmission block and the last transmission sub-frame of MTC PDCCH by the eNB 103.

Finally, a Hybrid Automatic Repeat Request (HARQ) Round Trip Tim (RTT) timer for UEs operating in enhanced coverage mode is modified to be a function of repetition configuration for HARQ-Acknowledgement (HARQ-ACK). The HARQ RTT timer covers the time from the end of last PDSCH received to the start of PDSCH for retransmission. For example, for FDD, the HARQ RTT timer is Z+8-1, where Z is the number of times HARQ-ACK transmission is repeated.

Embodiment 4: DRX

In certain embodiments, Discontinuous Reception (DRX) is configured for UEs operating in enhanced coverage mode for power saving purposes. There is a need to specify UE behavior for receiving repeated PDCCH.

In one option, the network configures a sufficiently long OnDuration so that the MTC UE 116 is able to receive the MTC PDCCH. In another option, MTC PDCCH is transmitted over multiple OnDuration periods consecutively.

Embodiment 5: non-essential MTC SIB delivery

In certain embodiments, system information that is considered non-essential for network connection, such as system information related to cell reselection (intra-frequency and inter-frequency) or inter-RAT reselection (contained in SIB3/4/5/6/7/8), is delivered to the UEs operating in enhanced coverage mode in RRC connected mode using dedicated (UE-specific) RRC signaling. Delivering the non-essential system information this way saves broadcast signaling overhead by avoiding (or minimizing) the need for the eNB 103 to repeat transmission of SIB3-8. The SIBs that are not considered essential for initial access, for example, all SIBs other than SIB1, SIB2, SIB 14, are non-essential SIBs. A UE, such as UE 115 or MTC UE 116, operating enhanced coverage mode may only need to receive a subset of non-essential SIBs, such as, only SIB3, 4 and 5, or only a subset of the content of those SIBs.

In one approach, a UE, such as UE 115 or MTC UE 116, operating in enhanced coverage mode can skip receiving non-essential SIBs via common control channel (broadcast channel, PDSCH scrambled with SI-RNTI) upon initial access. Instead, the UE concerned can, or is expected to, receive the non-essential SIBs (or a subset of the content of the non-essential SIBs) from the eNB 103 via dedicated RRC signaling upon entering RRC connected mode. The UE can assume that the configuration obtained remains valid when the UE enters RRC idle mode and performs cell reselection or a frequency reselection procedure according to the configuration.

In another approach, a UE, such as UE 115 or MTC UE 116, operating in enhanced coverage mode can still attempt to decode non-essential SIBs (assumed not designed for enhanced coverage) such as after initial access. The UE concerned may or may not successfully decode the non-essential SIBs. The UE is configured to indicate to the network the SIBs that the UE has successfully acquired or the SIBs that it could not acquire. The network then sends the SIB content that the UE did not acquire successfully via dedicated RRC signaling. However, there is also a need to specify how a UE, such as UE 115 or MTC UE 116, operating in enhanced coverage mode receives notification about changes in the non-essential SIBs.

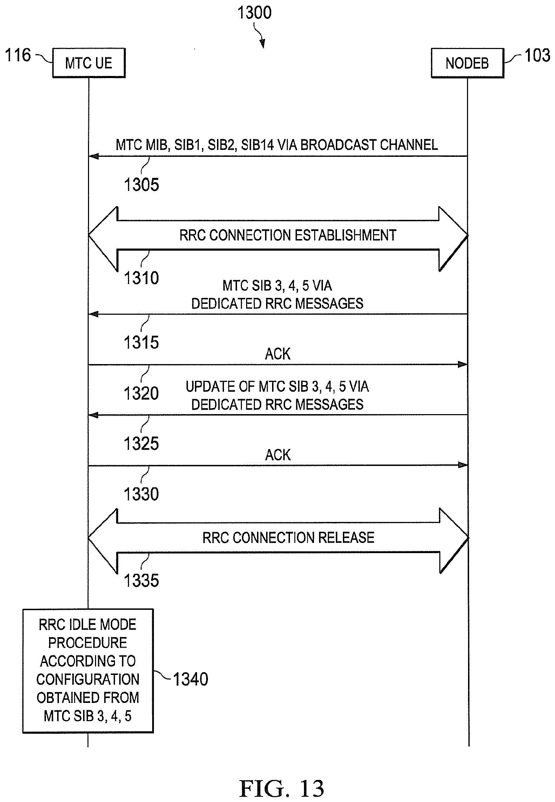

FIGURE 13 illustrates Example procedure of MTC non-essential SIBs delivery via dedicated RRC signaling 1300 according to this disclosure. While the chart depicts a series of sequential steps or signals, unless explicitly stated, no inference should be drawn from that sequence regarding specific order of performance, performance of steps and signals or portions thereof serially rather than concurrently or in an overlapping manner, or performance of the steps depicted exclusively without the occurrence of intervening or intermediate steps. The process depicted in the example depicted is implemented by a transmitter chains in, for example, a UE or MTC UE and an eNB.

In one alternative of non-essential SIBs notification, eNB 103 updates UEs operating in enhanced coverage mode with the new non-essential SIB information via dedicated Radio Resource Control (RRC) signaling. In this alternative, the need to transmit enhanced coverage non-essential SIBs can be avoided all together. For example, in step 1305, the MTC UE 116 receives MTC MIB, SIB1, SIB2 and SIB14, namely essential SIB information from eNB 103 via a broadcast channel. An RRC connection 1310 is established between the MTC UE 116 and eNB 103. Thereafter, the eNB 103 transmits non-essential SIB information, such as the MTC SIB3, 4 and 5, to the MTC UE 116 via dedicated RRC messages in step 1315. In response to receiving the MTC SIB3, 4 and 5, the MTC UE 116 transmits an Acknowledgment (ACK) 1320 to the eNB 103. Upon receiving the ACK 1320, in step 1325 eNB 103 transmits an update of MTC SIB3, 4 and 5 via the dedicated RRC messages. In response to receiving the update, in step 1330, the MTC UE 116 transmits an ACK to the eNB 103. Thereafter, the RRC connection is released in step 1335 and, in block 1340, the MTC UE 116 performs an RRC idle mode procedure according to the configuration obtained from the MTC SIB3, 4 and 5.

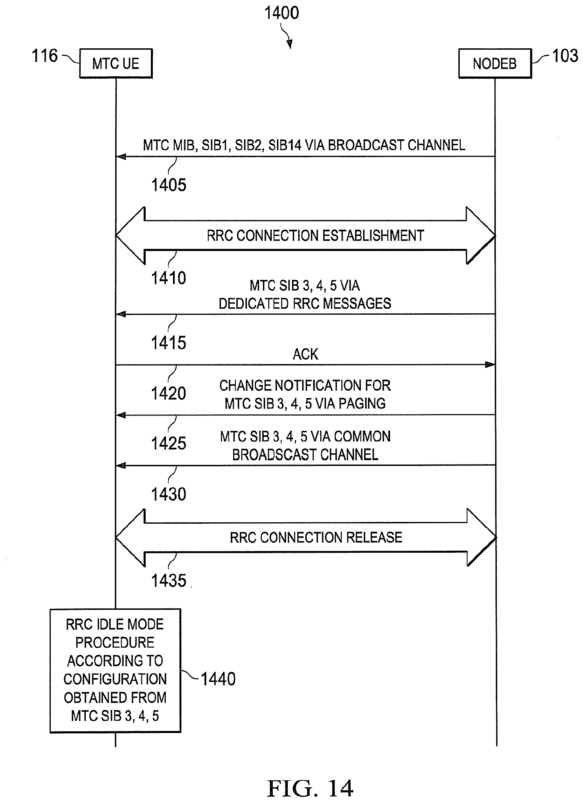

FIGURE 14 illustrates Example procedure of MTC non-essential SIBs delivery via dedicated RRC signaling with update via broadcast channel according to this disclosure. While the chart depicts a series of sequential steps or signals, unless explicitly stated, no inference should be drawn from that sequence regarding specific order of performance, performance of steps and signals or portions thereof serially rather than concurrently or in an overlapping manner, or performance of the steps depicted exclusively without the occurrence of intervening or intermediate steps. The process depicted in the example depicted is implemented by a transmitter chains in, for example, a UE or MTC UE and an eNB.

In another alternative of non-essential SIBs notification, eNB 103 broadcasts the non-essential SIBs for a period of time (for example, in a MTC SI modification period) if there is a change to one of the non-essential SIBs. For example, in step 1405, the MTC UE 116 receives MTC MIB, SIB1, SIB2 and SIB14, namely essential SIB information from eNB 103 via a broadcast channel. An RRC connection 1410 is established between the MTC UE 116 and eNB 103. Thereafter, the eNB 103 transmits the MTC SIB3, 4 and 5 to the MTC UE 116 via dedicated RRC messages in step 1415. In response to receiving the MTC SIB3, 4 and 5, the MTC UE 116 transmits an ACK 1420 to the eNB 103. The eNB 103 notifies, via a paging in step 1425, the MTC UE 116 operating in enhanced coverage mode that there is a change in the non-essential SIBs. In step 1430, upon receiving the paging, the MTC UE 116 starts to acquire the non-essential SIBs from the common control channel (broadcast channel, PDSCH scrambled with SI-RNTI) from the next MTC SI modification period. The scheduling of the non-essential SIBs is obtained from MTC SIB1. The MTC UE 116 also acquires MTC SIB1 to get updated scheduling information about the non-essential SIBs. Alternatively, the MTC UE 116 can assume that the scheduling information of the non-essential SIBs in MTC SIB1 remain unchanged, and the MTC UE 116 can skip acquiring MTC SIB1. Thereafter, the RRC connection is released 1435 and, in block 1440, the MTC UE 116 performs an RRC idle mode procedure according to the configuration obtained from the MTC SIB3, 4 and 5.

FIGURE 15 illustrates a first SIB1 transmission according to this disclosure. The embodiment of the SIB1 transmission 1500 shown in FIGURE 15 is for illustration only. Other embodiments could be used without departing from the scope of the present disclosure.

Embodiment 6: MTC SIB1 transmission

For ease of description in this embodiment, the additionally repeated SIB1 is referenced as MTC SIB1. The resource element mapping for the MTC SIB1 can be the same as the legacy SIB1 (with possible exception on the determination of the starting PDSCH symbol).

In a first alternative of MTC SIB1 transmission 1500 and reception, MTC UE 116 combines legacy SIB1 1505 and additionally repeated SIB1 1510 within 80ms period 1515, such as by combining the Log Likelihood Ratio (LLR) soft bits from different SIB1 transmissions. The first transmission of MTC SIB1 is scheduled in subframe #0 1520 of radio frames for which the SFN satisfies a certain condition, and repetitions are scheduled in sub-frame #0 1525 of all other radio frames within the 80ms period 1515 and sub-frame #5 1530 for which SFN mod 2 = 1 within the 80ms period 1515. In certain embodiments, it is advantageous to transmit MTC SIB1 1505 in only sub-frame #0 1520 and sub-frame #5 1530 since these are guaranteed to be downlink sub-frames regardless of TDD configuration. However, additional downlink sub-frames used for MTC SIB1 1505 are not precluded. For ease of illustration, in the example shown in FIGURE 15, only sub-frame #0 1520 and sub-frame #5 1530 are used MTC SIB1 1505 transmission. In addition, when MTC UE 116 assumes fixed resource allocation for SIB1 15005 that MTC UE 116 can combine, such as in the middle M PRBs of the system bandwidth (where M = 6, or 8, or 10, ... for example), the MTC UE 116 assumes that the starting symbol for PDSCH carrying SIB1 is fixed, for example, the fourth OFDM symbol of a sub-frame. For sub-frame #0 1520 where MTC SIB1 1505 is transmitted, the eNB 103 transmits MTC SIB1 1505 in all symbols in the PDSCH region except for OFDM symbols assigned for PBCH 1535.

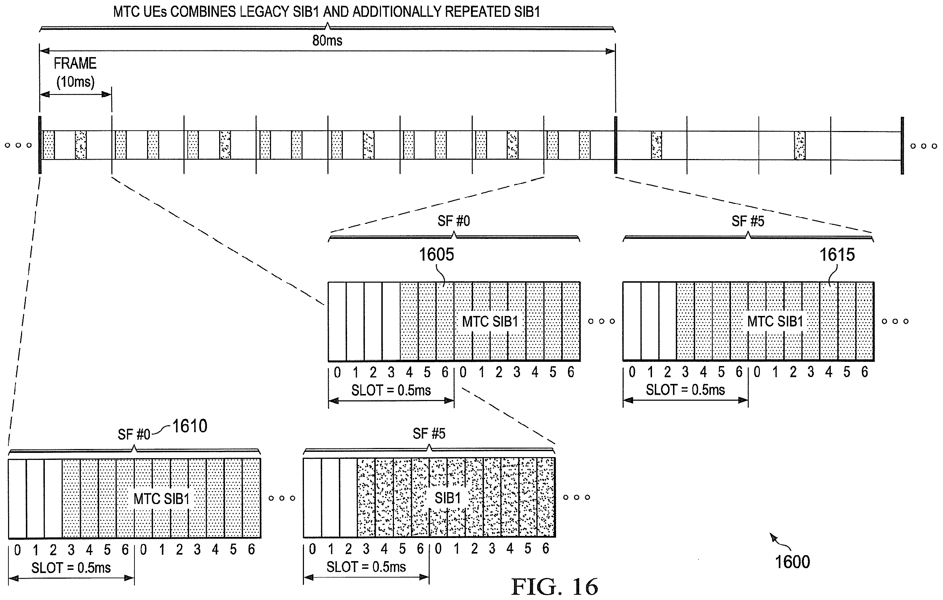

FIGURE 16 illustrates a second SIB1 transmission according to this disclosure. The embodiment of the SIB1 transmission 1600 shown in FIGURE 16 is for illustration only. Other embodiments could be used without departing from the scope of the present disclosure.

A second alternative of MTC SIB1 transmission 1600 and reception is similar to the first alternative of MTC SIB1 transmission 1500 (Alternative 1), except that if the system bandwidth is greater than 1.4MHz (for example, 5MHz), MTC SIB1 1605 of at least sub-frame #0 1610 can be transmitted by the eNB 103 and received by the MTC UE 116, in the M PRBs adjacent to the middle 6 PRBs, for example, in 6 contiguous PRBs located in frequency smaller or larger than the middle 6 PRBs (that is, M=6). SIB1 1615, (legacy or MTC SIB1) transmitted in sub-frame #5 1620, can still be located in the middle M PRBs or SIB1 1615 can be located in the same frequency locations as the MTC SIB1 1605 in sub-frame #0 1610. In the example shown in FIGURE 16, the frequency location of MTC SIB1 1605 is not shown for simplicity.

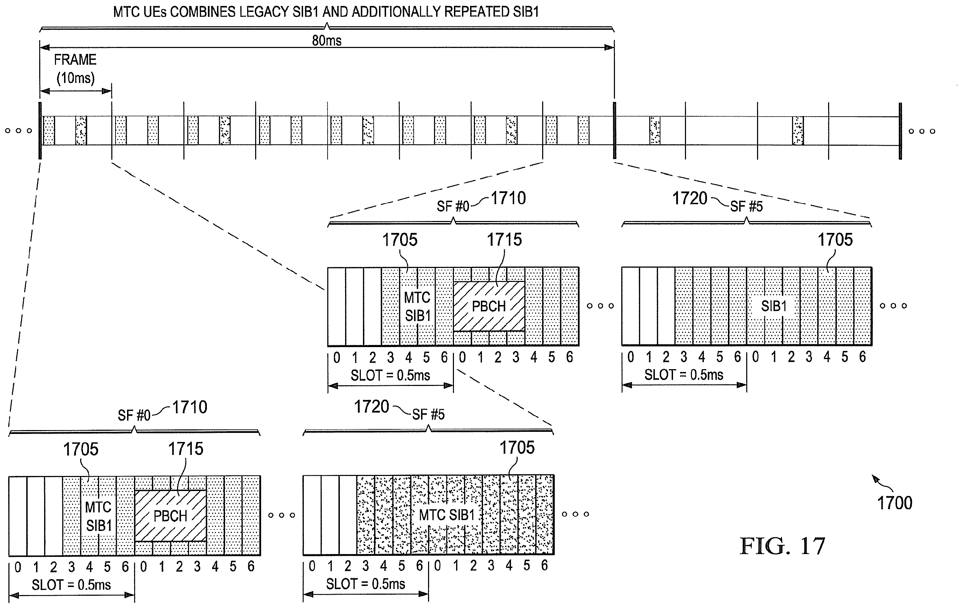

FIGURE 17 illustrates third SIB1 transmission according to this disclosure. The embodiment of the SIB1 transmission 1700 shown in FIGURE 17 is for illustration only. Other embodiments could be used without departing from the scope of the present disclosure.

A third alternative of MTC SIB1 transmission 1700 and reception is similar to the first alternative of MTC SIB1 transmission 1500 (Alternative 1), except that, if the system bandwidth is greater than 1.4MHz (such as 3 MHz or 5 MHz), MTC SIB1 1705 can be transmitted by the eNB 103 and received by the MTC UE 116. In the third alternative of MTC SIB1 transmission 1700, the MTC SIB1 1705 of sub-frame #0 1710 is located in the middle $M_2$ PRBs of the system bandwidth, for example, $M_2$=8 or 10, and so forth. For sub-frame #0 1710, the eNB 103 transmits MTC SIB1 1705 in all symbols in the PDSCH region except for OFDM symbols assigned for PBCH 1715. For sub-frame #5 1720, the legacy SIB1 or MTC SIB1 1705 can still be transmitted in the middle M PRBs (such as M=6, 8, 10...).

In a fourth alternative of MTC SIB1 transmission and reception, eNB 103 and MTC UE 116 changes SIB1 transmission and reception behavior, respectively depending upon the system bandwidth, such as:

Example 1:

(a) If the system bandwidth is 1.4MHz, eNB and UE assumes the first alternative;
(b) Else, eNB and UE assumes the third alternative.

Example 2:

(a) If the system bandwidth is 1.4MHz, eNB and UE assumes the first alternative;
(b) Else, eNB and UE assumes the second alternative.

Example 3:

(a) If the system bandwidth is 1.4MHz or 3MHz, eNB and UE assumes the first alternative;
(b) Else, eNB and UE assumes the second alternative.

Example 4:

(a) If the system bandwidth is 1.4MHz or 3MHz, eNB and UE assumes the first alternative;
(b) Else, eNB and UE assumes the third alternative.

For all the alternatives above, the condition on SFN for MTC SIB 1 transmission can be any of the following:

- SFN for which SFN mod 8 = 0
- SFN for which SFN mod 8*P = 0, where P > 0, e.g. P = 2,3,4,10, 100, 1000, and so forth.
- SFN for which SFN mod 8*P = N, where P > 0, e.g. P = 2,3,4,10, 100, 1000, and so forth, and N > 0, e.g. N=4, 8, and so forth (N can be set such as collision with MTC PBCH is avoided); and
- Other SFN for which condition described in Embodiment 1 is satisfied.

In a fourth alternative of MTC SIB1 transmission and reception, eNB 103 and MTC UE 116 changes SIB1 transmission and reception behavior, respectively depending upon frequency location of the M contiguous physical resource blocks (e.g. M= 6) which can change for every transmission instance, e.g. every 5 ms period. The frequency hopping pattern can be a function of the system bandwidth and the SFN, and the pattern is such that R=floor(system bandwidth/M) repetitions are in non-overlapping bandwidths.

For all the alternatives above, if sub-frames for MTC SIB1 transmission coincide with MTC PBCH transmission, the MTC UE 116 can assume that MTC SIB1 is not transmitted, and MTC PBCH is transmitted.

The possible combinations of physical channels that can be received in parallel in the downlink in the same sub-frame by a Rel-11 UE is described in Section 8.2 of 3GPP TS 36.302 (See REF6). For cost-saving purpose, the MTC UE 116 may not have the same layer 1 processing capability as the UEs of existing categories defined from Rel-8 - 11. A new UE category, for example, Category 0 (Cat 0 UE) (other category naming convention is not precluded), is defined for the MTC UE 116. Generally, a Cat 0 UE has limited DL data processing capability compared to the other categories. Some possible examples of the capability limitations for Cat 0 UE are as follows:

For each TTI:

Example 1: Cat 0 UE is able to receive 1 TB only (for example, DL-SCH (unicast) TB (RRC connected mode), DL-SCH TB for SI broadcast, DL-SCH TB for RAR, BCH TB, PCH TB)

Example 2: Cat 0 UE is able to receive 1 DL-SCH TB for unicast (RRC connected mode), 1 DL-SCH TB for SI broadcast, 1 DL-SCH TB for RAR and 1 BCH TB and 1 PCH TB if the total number of bits for all TBs do not exceed the maximum number of TB bits (such as 1000 bits) that can be received within a TTI for a Cat 0 UE.

Example 3: Cat 0 UE is able to receive 1 DL-SCH TB for unicast (RRC connected mode), and 1 DL-SCH TB for RAR, and one of 1 DL-SCH TB for SI broadcast and 1 BCH TB and 1 PCH TB, where each TB size is fewer than the maximum number of TB bits that can be received within a TTI for a Cat 0 UE.

Example 4: Cat 0 UE is able to receive 1 DL-SCH TB for unicast (RRC connected mode) and 1 DL-SCH TB for SI broadcast and 1 DL-SCH TB for RAR and 1 BCH TB and 1 PCH TB, where each TB size is fewer than the maximum number of TB bits that can be received within a TTI for a Cat 0 UE.

Example 5: Cat 0 UE is able to receive 1 DL-SCH TB for unicast (RRC connected mode) and 1 DL-SCH TB for SI broadcast and 1 DL-SCH TB for RAR and 1 BCH TB and 1 PCH TB if the total PRBs assigned for all TBs do not exceed the maximum number of PRBs that can be received within a TTI for a Cat 0 UE.

Example 6: Cat 0 UE is only able to receive 1 DL-SCH TB of up to X number of bits and 1 DL-SCH TB of up to Y number of bits simultaneously in the same sub-frame, where X can be, for example, 1000 bits and Y can be, for example, 2216 bits

Combinations of the above examples are possible. Other variations of the above examples are possible.

Although a network, or an eNB, can be aware of the category of a UE based on signaling from the UE, the network may not know if the UE is receiving a common message such as a broadcast control message (a MIB or a SIB) or a paging message in a sub-frame. Therefore, the network cannot be sure if scheduling a unicast message for a UE in a sub-frame may coincide with the reception of broadcast or paging message by the UE. Therefore, there is a need to specify how collision of DL receptions of broadcast messages and unicast messages should be resolved for Cat 0 UE.

In one embodiment (Embodiment 7 - dropping rule):

Due to the L1 processing capability limitation of Cat 0 UE as mentioned above, there is a need to specify how collision of DL receptions of broadcast messages and unicast messages should be resolved for Cat 0 UE.

One approach to avoid this collision of DL receptions of broadcast messages and unicast messages is for the network to schedule a Cat 0 UE only in a TTI without a broadcast or paging message that the UE may receive or attempt to receive within the same TTI. That is, to avoid collision, the network, or eNB 103, schedules a Cat 0 UE only in a TTI in which there will be no broadcast or paging message that the UE may receive or attempt to receive within the same TTI. In this approach, the Cat 0 UE can determine or assume that the Cat 0 UE is not expected to receive a unicast message in a TTI in which system information or paging is transmitted. The Cat 0 UE may also not monitor PDCCHs/EPDDCHs with CRC scrambled with C-RNTI/SPS C-RNTI, and the number of PDCCH/EPDCCH decoding can be reduced. However, this approach can result in excessive scheduling restriction to the network since TTIs for system information or paging cannot be used for unicast transmissions and the UE may not always receive or need to receive system information or paging.

To mitigate the aforementioned scheduling restriction, another approach allows a simultaneous transmission of a broadcast or a paging message with unicast messages by the network. The Cat 0 UE then receives the entire set of messages or a subset of the messages based on a capability of the Cat 0 UE. For this approach, there is a need to specify a priority ordering of DL data types for Cat 0 UE.

In one method (Method 1), the DL data type reception priority can depend on RNTI and a particular priority ordering is given as follows:

BCH (PBCH) > SI-RNTI > P-RNTI > RA-RNTI > C-RNTI/SPS C-RNTI

which means that the UE prioritizes BCH (PBCH) reception over DL-SCH for SI broadcast (PDSCH scrambled with SI-RNTI); DL-SCH for SI broadcast (PDSCH scrambled with SI-RNTI) is prioritized over PCH (paging, PDSCH scrambled with P-RNTI); PCH (paging, PDSCH scrambled with P-RNTI) is prioritized over RAR (PDSCH scrambled with RA-RNTI); RAR (PDSCH scrambled with RA-RNTI) is prioritized over unicast data (PDSCH scrambled with C-RNTI/SPS C-NTI).

The above ordering gives a higher priority to system information reception (MIB and SIBs), common messages (paging, RAR) over unicast messages (C-RNTI/SPS C-RNTI). BCH (PBCH) contains MIB, and the BCH (PBCH) is prioritized over the rest of data types as MIB contains the most essential information for cell access. PDSCH scrambled with SI-RNTI is prioritized over P-RNT/RA-RNTI and C-RNTI/SPS C-RNTI, as the PDSCH can also contain essential system information for cell access, such as SIB 1 and SIB2, especially if the UE does not have the valid system information of the current cell. Furthermore, SIB2 also informs the UE when to monitor for paging. Paging (PDSCH scrambled with P-RNTI) is prioritized over RAR (RA-RNTI) and uncast data (C-RNTI/SPS C-RNTI), since paging is used to inform the UE about important events such as system information change, incoming call, and emergency messages, such as ETWS. RAR is prioritized over unicast messages since completion of random access procedure may be required for purposes that are time critical such UL synchronization and scheduling request; furthermore it also conforms to Rel-8 UE behavior (See also REF3).

The priority rule does not necessarily imply that the UE is required to monitor or receive MIB and SIBs for every transmission instances. The legacy UE behavior with regards to when the UE should monitor and receive MIB and SIBs can still be applied. Similarly, a UE only monitors for RA-RNTI when needed, namely in sub-frames of RAR monitoring window.

For UE capability according to Example 1, a Cat 0 UE first determines the TBs that are transmitted in a TTI and the TBs that the Cat 0 UE is required to receive; then the UE selects to receive the TB with the highest priority among the TBs concerned. The other TBs of lower priority are not received or discarded. If unicast data is scheduled for the UE and is known by the UE through PDCCH, EPDCCH or network configuration, but is deprioritized as a result of existence of another higher priority TB in the same TTI, the UE sends a negative acknowledgment (NACK) to the eNB 103 to inform the eNB 103 about the uncast reception failure. The eNB 103 can then schedule a retransmission of the dropped unicast message.

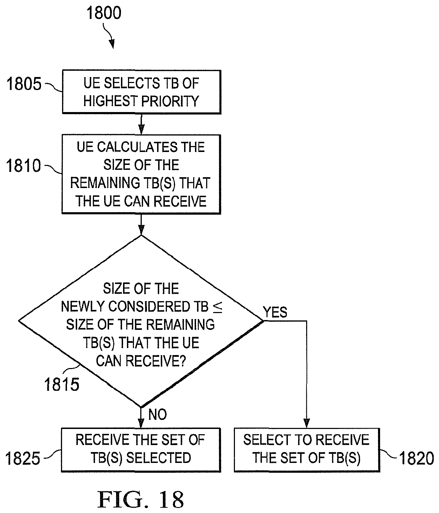

FIGURE 18 illustrates a process 1800 to select the set of TBs to receive according to this disclosure. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a transmitter chain in, for example, a mobile station.

For UE capability according to Example 2, the Cat 0 UE first determines the TBs that are transmitted in a TTI and the TBs that the Cat 0 UE is required to receive. The UE then considers the TBs to receive from the highest priority to the lowest priority until all TBs are included or until the UE capability is exceeded; in which case, the last TB considered is not included to stay within the UE processing capability. One example of a detailed procedure to select the set of TBs to receive is given below:

In block 1805 (Step 1), the UE considers the TB to receive one by one from the highest priority to the lowest priority. The UE first selects to receive the TB of the highest priority among the TBs.

In block 1810 (Step 2), the UE calculates the size of the remaining TB(s) that the UE can receive by subtracting the TB size of the selected TB from the maximum TB size that it is capable of receiving.

In block 1815 (Step 3), the UE considers the TB of the next highest priority. If the size of the newly considered TB is smaller than the size of the remaining TB(s) that the UE can receive, select to receive the TB in block 1820 and go to Step 2 in block 1810. If the size of the newly considered TB is not smaller than the size of the remaining TB(s) that the UE can receive, proceed to Step 4 in block 1825. In block 1825, (Step 4), the UE proceeds to receive the set of TB(s) selected.

Note that processing (namely, demodulation and decoding) of a selected TB can also take place after the TB has been selected for processing. That is, the UE may not need to wait for the completion of the whole selection procedure.

In another method (Method 2), the DL data type reception priority is as follows:

BCH (PBCH) > P-RNTI > SI-RNTI > RA-RNTI > C-RNTI/SPS C-RNTI,

which means that the UE prioritizes BCH (PBCH) reception over PCH (paging, PDSCH scrambled with P-RNTI); PCH (paging, PDSCH scrambled with P-RNTI) is prioritized over DL-SCH for SI broadcast (PDSCH scrambled with SI-RNTI); DL-SCH for SI broadcast (PDSCH scrambled with SI-RNTI) is prioritized over RAR (PDSCH scrambled with RA-RNTI); RAR (PDSCH scrambled with RA-RNTI) is prioritized over unicast data (PDSCH scrambled with C-RNTI/SPS C-RNTI).

The above ordering gives a higher priority to system information reception (MIB and SIBs), common messages (paging, RAR) over unicast messages (C-RNTI/SPS C-RNTI). The difference compared to Method 1 is the prioritization of P-RNTI over SI-RNTI. This is because P-RNTI is used to inform the UE about important events such as system information change, incoming call, and emergency messages, such as ETWS. System information is normally transmitted multiple times by the network; therefore, the UE can still acquire system information at the next time instance.

The priority rule does not necessarily imply that the UE has to monitor or receive MIB and SIBs for every transmission instances. The legacy UE behavior with regards to when the UE should monitor and receive MIB and SIBs can still be applied. Similarly, the UE only monitors for RA-RNTI when needed, namely, in sub-frames of RAR monitoring window). The UE procedure to receive DL data according to the priority rule can be as described for Method 1.

In another method (Method 3), the priority of the DL data type reception priority depends upon the current state or configuration at the UE. In one example, the priority of SI-RNTI and P-RNTI depends on whether valid system information has been received by or configured to the UE for the current serving cell. Alternatively, the priority of SI-RNTI and P-RNTI depends on whether the current system information is no longer valid or will become invalid.

If the UE has not yet received system information from the current serving cell, when the current system information is no longer valid or when the current system information will become invalid, such as informed by paging:

```
BCH (PBCH) > SI-RNTI > P-RNTI > RA-RNTI > C-RNTI/SPS C-RNTI,
```

```
Else:
      BCH (PBCH) > P-RNTI > SI-RNTI > RA-RNTI > C-RNTI/SPS C-RNTI,
   Option 1: BCH (PBCH) > P-RNTI > SI-RNTI > RA-RNTI > C-RNTI/SPS C-RNTI,
                                 Or
 Option 2: P-RNTI > BCH (PBCH) > SI-RNTI > RA-RNTI > C-RNTI/SPS C-RNTI,Or
    Option 3: P-RNTI > RA-RNTI > C-RNTI/SPS C-RNTI > BCH (PBCH) > SI-RNTI
 End
```

In another example, if only a particular system information, for example, SIB14, is no longer valid or will become invalid, such as by being informed via paging, prioritization of SI-RNTI over paging only occurs for the corresponding SIB, as described below for SIB14.

If the UE has not yet received System Information from the current serving cell or that the current system information is no longer valid:

```
 BCH (PBCH) > SI-RNTI > P-RNTI > SI-RNTI > RA-RNTI > C-RNTI/SPS C-RNTI,
 Else if the UE has received notification via paging about EAB parameter (SIB14) change
 (but not general system information change):
  BCH (PBCH) > SI-RNTI (SIB14) > P-RNTI > SI-RNTI (other relevant SIBs) > RA-
                     RNTI > C-RNTI/SPS C-RNTI,
 Else:
         BCH (PBCH) > P-RNTI > SI-RNTI > RA-RNTI > C-RNTI/SPS C-RNTI,
    Option 1: BCH (PBCH) > P-RNTI > SI-RNTI > RA-RNTI > C-RNTI/SPS C-RNTI,
                                 Or
  Option 2: P-RNTI > BCH (PBCH) > SI-RNTI > RA-RNTI > C-RNTI/SPS C-RNTI,Or
     Option 3: P-RNTI > RA-RNTI > C-RNTI/SPS C-RNTI > BCH (PBCH) > SI-RNTI
 End
```

The above method can be extended to prioritization of other SIB type over paging. The above method can be extended to prioritization of multiple SIB types over paging.

The priority rule does not necessarily imply that the UE has to monitor or receive MIB and SIBs, for every transmission instances. The legacy UE behavior with regards to when the UE should monitor and receive MIB and SIBs can still be applied. Similarly, the UE only monitors for RA-RNTI when needed, such as in sub-frames of RAR monitoring window. The UE procedure to receive DL data according to the priority rule can be as described for Method 1.

**In another method (Method 4),** the priority of SI-RNTI and P-RNTI depends on the type of SIB. Some examples are given below.

Example A: BCH (PBCH) > SI-RNTI (SIB1, 2) > P-RNTI > SI-RNTI (other relevant SIBs) > RA-RNTI > C-RNTI/SPS C-RNTI.
Reason: SIB1 and SIB2 contain essential system information for cell access; therefore is considered more important than paging. SIB3-16 are not essential for cell access; therefore they are deprioritized over paging.
Example B: BCH (PBCH) > SI-RNTI (SIB1, 2, 14) > P-RNTI > SI-RNTI (other relevant SIBs) > RA-RNTI > C-RNTI/SPS C-RNTI.
Reason: Similar as Example A, except that SIB14 is also prioritized over paging. This is because SIB14 contains EAB parameters, which indicates if a cell should be barred from access for Cat 0 UE.
Example C: BCH (PBCH) > SI-RNTI (SIB1, 2, 3, 4, 5, 14) > P-RNTI > SI-RNTI (other relevant SIBs) > RA-RNTI > C-RNTI/SPS C-RNTI,
Reason: Reason: Similar as Example B, except that idle mode mobility information reception is also prioritized over paging. This is to facilitate faster cell reselection procedure.

The priority rule does not necessarily imply that the UE has to monitor or receive MIB and SIBs for every transmission instances. The legacy UE behavior with regards to when the UE should monitor and receive MIB and SIBs can still be applied. Similarly, the UE only monitors for RA-RNTI when needed, such as in sub-frames of RAR monitoring window.

In another method (Method 5), the priority of the DL data type reception priority depends upon the current state of data reception at the UE. If physical channels transmissions are repeated for coverage enhancement, the physical channel with the shorter remaining duration to be received by the UE can be prioritized. For example, suppose a unicast PDSCH (C-RNTI) is repeated for 10 sub-frames and the UE has already received 9 sub-frames and there is only one more sub-frame to be received at sub-frame n, suppose further that a paging PDSCH (P-RNTI) is to be repeated for 5 sub-frames and the first sub-frame is transmitted in sub-frame n, the UE prioritizes the reception of the unicast PDSCH over the paging PDSCH since the remaining number of sub-frames for unicast PDSCH is 1 versus 5 for the paging PDSCH.

In one embodiment (Embodiment 8 - RNTI monitoring behavior for MTC UE):

Dropping rules described in the previous embodiment incurs cost in terms of network resource loss and UE throughput loss, which can be severe for Cat 0 UE configured in enhanced coverage mode since a DL signal that is repeated potentially many times can be dropped by the UE as a result of the prioritization rule. To minimize the loss due to dropping, new RNTI monitoring behavior can be defined for Cat 0 UE.

In one method, a Cat 0 UE does not monitor or receive PBCH and SI-RNTI by default when in RRC connected mode. The Cat 0 UE only receives and monitors PBCH and SI-RNTI when there is SI change informed to the UE via paging. The eNB does not schedule unicast data in sub-frames in which the Cat 0 UE is expected to receive MIB and SIBs.

When in RRC connected mode, the Cat 0 UE monitors or receive paging (P-RNTI), RA-RNTI (when relevant, during RACH procedure) and C-RNTI/SPS C-RNTI. Dropping rules for P-RNTI, RA-RNTI and C-RNTI/SPS C-RNTI can still be applied, such as according to the following rule:

P-RNTI > RA-RNTI > C-RNTI/SPS C-RNTI

Sub-frames used for paging can also be free from other transmission to a Cat 0 UE. Therefore, a Cat 0 UE does not need to monitor for RA-RNTI or C-RNTI/SPS-RNTI in those sub-frames. In this case, the following dropping rule can be applied:

RA-RNTI > C-RNTI/SPS C-RNTI

Although various features have been shown in the figures and described above, various changes may be made to the figures. For example, the size, shape, arrangement, and layout of components shown in FIGURES 1 through 3B are for illustration only. Each component could have any suitable size, shape, and dimensions, and multiple components could have any suitable arrangement and layout. Also, various components in FIGURES 1 through 3B could be combined, further subdivided, or omitted and additional components could be added according to particular needs. Further, each component in a device or system could be implemented using any suitable structure(s) for performing the described function(s). In addition, while FIGURES 8, 13, 14 and 18 illustrate various series of steps, various steps in FIGURES 8, 13, 14 and 18 could overlap, occur in parallel, occur multiple times, or occur in a different order.

## Claims

1. A method performed by a base station for communicating with a coverage enhanced user equipment, UE, the method comprising:

   transmitting system information, SI, to the coverage enhanced UE in a machine type communication, MTC, frame structure, the MTC frame structure comprising intermittent transmission periods of a number of MTC SI transmissions, each MTC SI transmission comprising an MTC master information block, MIB, or one of a number of MTC system information blocks, SIBs, wherein two consecutive MTC SI transmissions are separated by N number of frames, wherein *N* is an integer number, **characterized in that** transmitting comprises:

   transmitting a first MTC SI transmission after a first fixed number of frames from a last frame on a MTC physical broadcast channel, MTC PBCH, and
   transmitting a second MTC SI transmission after a second fixed number of frames from a transmission frame of the first MTC SI transmission.

2. The method as set forth in claim 1, wherein transmitting comprises:
   transmitting an MTC SI transmission during an MTC SI modification period, the MTC SI modification period defined based on a modification period coefficient indicated by a network, and a default paging cycle indicated by the network.

3. The method as set forth in claim 2, wherein a first frame of the MTC PBCH is determined as one of:

   a first frame of the MTC SI modification period plus a predefined sub-frame, and
   the first frame of the MTC SI modification period plus a frame offset.

4. The method as set forth in claim 2, wherein the MTC SI transmission transmitted in the MTC SI modification period is a single MTC SI transmission block or a plurality of periodic MTC SI transmission blocks, wherein the transmission period for the plurality of periodic MTC SI transmission blocks comprises an MTC SI window defined by a time window in which the MTC MIB is repeated.

**5.** The method as set forth in claim 4, wherein a length of the MTC SI window for the coverage enhanced UE is different than a legacy SI window length, and wherein a periodicity of the MTC SI window matches a periodicity of the legacy SI window.

**6.** A base station, BS, configured to communicate with a coverage enhanced user equipment, UE, the BS comprising: a transmit, TX, processing circuitry configured to transmit system information, SI, to the coverage enhanced UE in a machine type communication, MTC, frame structure, and control the BS to operate according to the method of one of claim 1 to claim 5.

**7.** A method performed by a coverage enhanced user equipment, UE, for communicating with a base station, the method comprising:

receiving, from the base station, system information, SI, in a machine type communication, MTC, frame structure, the MTC frame structure comprising intermittent transmission periods of a number of MTC SI transmissions, each MTC SI transmission comprising an MTC master information block, MIB, or one of a number of MTC system information blocks, SIBs, wherein two consecutive MTC SI transmissions are separated by N number of frames, wherein N is an integer number, **characterized in that** receiving comprises: receiving a first MTC SI transmission after a first fixed number of frames from a last frame on a MTC physical broadcast channel, MTC PBCH; and receiving a second MTC SI transmission after a second fixed number of frames from a transmission of the first MTC SI transmission.

**8.** The method as set forth in claim 7, wherein receiving comprises: receiving an MTC SI transmission during an MTC SI modification period, the MTC SI modification period defined based on a modification period coefficient indicated by a network, and a default paging cycle indicated by the network.

**9.** The method as set forth in claim 8, wherein a first frame of the MTC PBCH is determined as one of:

a first frame of the MTC SI modification period plus a predefined sub-frame, and a first frame of the MTC SI modification period plus a frame offset.

**10.** The method as set forth in claim 8, wherein the MTC SI transmission received in the MTC SI modification period is or plurality of periodic MTC SI transmission blocks, wherein the transmission period for the plurality of periodic MTC SI transmission blocks comprise an MTC SI window defined by a time window in which the MTC MIB is repeated.

**11.** The method as set forth in claim 10, wherein a length of the MTC SI window for the coverage enhanced UE is different than a legacy SI window length, and wherein a periodicity of the MTC SI window matches a periodicity of the legacy SI window.

**12.** A coverage enhanced user equipment, UE, for communicating with a base station, the coverage enhanced UE comprising a controller configured to control the UE to operate according to the method of one of claim 7 to claim 11.

**Patentansprüche**

**1.** Verfahren, das zum Kommunizieren mit einem abdeckungsverbesserten Benutzergerät, UE, von einer Basisstation durchgeführt wird, wobei das Verfahren Folgendes umfasst:

Übertragen von Systeminformationen, SI, an das abdeckungsverbesserte UE in einer Maschinenkommunikations(MTC)-Rahmenstruktur, wobei die Maschinenkommunikations(MTC)-Rahmenstruktur diskontinuierliche Übertragungszeiträume einer Anzahl von MTC-SI-Übertragungen umfasst, wobei jede MTC-SI-Übertragung einen MTC-Master-Informationsblock(MIB) oder einen der Anzahl der MTC-Systeminformationsblöcke(SIBs) umfasst, wobei zwei aufeinanderfolgende MTC-SI-Übertragungen durch N Anzahl der Rahmen getrennt werden, wobei N eine ganze Zahl ist, **dadurch gekennzeichnet, dass** die Übertragung Folgendes umfasst: Übertragen einer ersten MTC-SI-Übertragung nach einer ersten festen Anzahl von Rahmen von einem letzten Rahmen auf einem MTC-physikalischen Broadcast-Kanal, MTC-PBCH, und

Übertragen einer zweiten MTC-SI-Übertragung nach einer zweiten festen Anzahl von Rahmen durch einen Übertragungsrahmen der ersten MTC-SI-Übertragung.

2. Verfahren nach Anspruch 1, wobei das Übertragen Folgendes umfasst:
Übertragen einer MTC-SI-Übertragung während eines MTC-SI-Änderungszeitraums, wobei der MTC-SI-Änderungszeitraum basierend auf einem von einem Netzwerk angegebenen Änderungsperiodenkoeffizienten und einem von dem Netzwerk angegebenen Standard-Paging-Zyklus definiert wird.

3. Verfahren nach Anspruch 2, wobei ein erster Rahmen des MTC-PBCH als einer von Folgenden bestimmt wird:

ein erster Rahmen des MTC-SI-Änderungszeitraums plus ein vordefinierter Teilrahmen, und
der erste Rahmen des MTC-SI-Änderungszeitraums plus ein Rahmenversatz.

4. Verfahren nach Anspruch 2, wobei die MTC-SI-Übertragung, die in dem MTC-SI-Änderungszeitraum übertragen wird, ein einzelner MTC-SI-Übertragungsblock oder eine Vielzahl von periodischen MTC-SI-Übertragungsblöcken ist,
wobei der Übertragungszeitraum für die Vielzahl von periodischen MTC-SI-Übertragungsblöcken ein MTC-SI-Fenster umfasst, das durch ein Zeitfenster definiert ist, in dem der MTC-MIB wiederholt wird.

5. Verfahren nach Anspruch 4, wobei sich eine Länge des MTC-SI-Fensters für das abdeckungsverbesserte UE von einer älteren SI-Fensterlänge unterscheidet, und wobei eine Periodizität des MTC-SI-Fensters mit einer Periodizität des älteren SI-Fensters übereinstimmt.

6. Basisstation, BS, die konfiguriert ist, um mit einem abdeckungsverbesserten Benutzergerät, UE, zu kommunizieren, wobei die BS Folgendes umfasst:
eine Übertragungs(TX)-Verarbeitungsschaltung, die konfiguriert ist, um Systeminformationen, SI, an das abdeckungsverbesserte UE in einer Maschinenkommunikations(MTC)-Rahmenstruktur zu übertragen, und
Steuern der BS um entsprechend dem Verfahren nach einem der Ansprüche 1 bis 5 zu verfahren.

7. Verfahren, das von einem abdeckungsverbesserten Benutzergerät, UE, zur Kommunikation mit einer Basisstation durchgeführt wird, wobei das Verfahren Folgendes umfasst:

Empfangen von Systeminformationen, SI, in einer Maschinenkommunikations(MTC)-Rahmenstruktur, wobei die Maschinenkommunikations(MTC)-Rahmenstruktur diskontinuierliche Übertragungszeiträume einer Anzahl von MTC-SI-Übertragungen umfasst, wobei jede MTC-SI-Übertragung einen MTC-Master-Informationsblock(MIB) oder einen der Anzahl von MTC-Systeminformationsblöcken(SIBs) umfasst,
wobei zwei aufeinanderfolgende MTC-SI-Übertragungen durch *N* Anzahl der Rahmen getrennt werden, wobei *N* eine ganze Zahl ist,
**dadurch gekennzeichnet, dass** das Empfangen Folgendes umfasst:
Empfangen einer ersten MTC-SI-Übertragung nach einer ersten festen Anzahl von Rahmen von einem letzten Rahmen auf einem MTC-physikalischen Broadcast-Kanal, MTC-PBCH; und Empfangen einer zweiten MTC-SI-Übertragung nach einer zweiten festen Anzahl von Rahmen durch einen Übertragungsrahmen der ersten MTC-SI-Übertragung.

8. Verfahren nach Anspruch 7, wobei das Empfangen Folgendes umfasst:
Empfangen einer MTC-SI-Übertragung während eines MTC-SI-Änderungszeitraums, wobei der MTC-SI-Änderungszeitraum basierend auf einem von einem Netzwerk angegebenen Änderungsperiodenkoeffizienten und einem von dem Netzwerk angegebenen Standard-Paging-Zyklus definiert wird.

9. Verfahren nach Anspruch 8, wobei ein erster Rahmen des MTC-PBCH als einer von Folgenden bestimmt wird:

ein erster Rahmen des MTC-SI-Änderungszeitraums plus ein vordefinierter Teilrahmen, und
ein erster Rahmen des MTC-SI-Änderungszeitraums plus ein Rahmenversatz.

10. Verfahren nach Anspruch 8, wobei die MTC-SI-Übertragung, die in der MTC-SI-Veränderungszeit empfangen wird, ein einzelner oder eine Vielzahl von periodischen MTC-SI-Übertragungsblöcken ist,
wobei der Übertragungszeitraum für die Vielzahl von periodischen MTC-SI-Übertragungsblöcken ein MTC-SI-Fenster umfasst, das durch ein Zeitfenster definiert ist, in dem der MTC-MIB wiederholt wird.

**11.** Verfahren nach Anspruch 10, wobei sich eine Länge des MTC-SI-Fensters für das abdeckungsverbesserte UE von einer älteren SI-Fensterlänge unterscheidet, und
wobei eine Periodizität des MTC-SI-Fensters mit einer Periodizität des älteren SI-Fensters übereinstimmt.

**12.** Abdeckungsverbessertes Benutzergerät, UE, zum Kommunizieren mit einer Basisstation, wobei das abdeckungsverbesserte UE eine Steuerung umfasst, die konfiguriert ist, um das UE zu steuern, damit es gemäß den Ansprüchen 7 bis 11 betrieben wird.

**Revendications**

**1.** Procédé mis en œuvre par une station de base pour communiquer avec un équipement utilisateur, UE, à couverture étendue, le procédé comprenant :

transmettre des informations de système, SI, à l'UE à couverture étendue dans une structure de trame de communication de type machine, MTC, la structure de trame de MTC comprenant des périodes de transmission intermittentes d'un certain nombre de transmissions de SI de MTC, chaque transmission de SI de MTC comprenant un bloc d'informations principal, MIB, de MTC, ou l'un parmi un certain nombre de blocs d'informations de système, SIB, de MTC, où deux transmissions de SI de MTC consécutives sont séparées par un nombre N de trames, où N est un nombre entier,
**caractérisé en ce que** la transmission comprend :

transmettre une première transmission de SI de MTC après un premier nombre fixe de trames d'une dernière trame sur un canal de diffusion physique de MTC, PBCH MTC, et
transmettre une deuxième transmission de SI de MTC après un deuxième nombre fixe de trames d'une trame de transmission de la première transmission de SI de MTC.

**2.** Procédé selon la revendication 1, où la transmission comprend :
transmettre une transmission de SI de MTC pendant une période de modification de SI de MTC, la période de modification de SI de MTC étant définie sur la base d'un coefficient de période de modification indiqué par un réseau et d'un cycle de recherche par défaut indiqué par le réseau.

**3.** Procédé selon la revendication 2, où une première trame du PBCH de MTC est déterminée comme l'une parmi les trames suivantes :

une première trame de la période de modification de SI de MTC plus une sous-trame prédéfinie, et
la première trame de la période de modification de SI de MTC plus un décalage de trame.

**4.** Procédé selon la revendication 2, où la transmission de SI de MTC transmise dans la période de modification de SI de MTC est un bloc de transmission de SI de MTC unique ou une pluralité de blocs de transmission de SI de MTC périodiques,
où la période de transmission pour la pluralité de blocs de transmission de SI de MTC périodiques comprend une fenêtre de SI de MTC définie par une fenêtre temporelle où le MIB de MTC est répété.

**5.** Procédé selon la revendication 4, où une longueur de la fenêtre de SI de MTC pour l'UE à couverture étendue est différente d'une longueur de fenêtre de SI existante et où une périodicité de la fenêtre de SI de MTC correspond à une périodicité de la fenêtre de SI existante.

**6.** Station de base, BS, configurée pour communiquer avec un équipement utilisateur, UE, à couverture étendue, la BS comprenant :
un système de circuits de traitement de transmissions, TX, configuré pour transmettre des informations de système, SI, à l'UE à couverture étendue dans une structure de trame de communication de type machine, MTC, et commander le fonctionnement de la BS selon le procédé de l'une des revendications 1 à 5.

**7.** Procédé mis en œuvre par un équipement utilisateur, UE, à couverture étendue pour communiquer avec une station de base, le procédé comprenant :

recevoir, de la station de base, des informations de système, SI, dans une structure de trame de communication de type machine, MTC, la structure de trame de MTC comprenant des périodes de transmission intermittentes d'un certain nombre de transmissions de SI de MTC, chaque transmission de SI de MTC comprenant un bloc d'informations principal, MIB, de MTC ou l'un des nombreux blocs d'informations de système, SIB, de MTC où deux transmissions de SI de MTC consécutives sont séparées par un nombre N de trames, où N est un nombre entier,

**caractérisé en ce que** la réception comprend :

recevoir une première transmission de SI de MTC après un premier nombre fixe de trames d'une dernière trame sur un canal de diffusion physique de MTC, PBCH MTC ; et recevoir une deuxième transmission de SI de MTC après un deuxième nombre fixe de trames à partir d'une transmission de la première transmission de SI de MTC.

8. Procédé selon la revendication 7, où la réception comprend :

recevoir une transmission de SI de MTC pendant une période de modification de SI de MTC, la période de modification de SI de MTC étant définie sur la base d'un coefficient de période de modification indiqué par un réseau et d'un cycle de recherche par défaut indiqué par le réseau.

9. Procédé selon la revendication 8, où une première trame du PBCH de MTC est déterminée comme l'une parmi les trames suivantes :

une première trame de la période de modification de SI de MTC plus une sous-trame prédéfinie, et
une première trame de la période de modification de SI de MTC plus un décalage de trame.

10. Procédé selon la revendication 8, où la transmission de SI de MTC reçue dans la période de modification de SI de MTC est constituée d'une pluralité de blocs de transmission de SI de MTC périodiques,
où la période de transmission pour la pluralité de blocs de transmission de SI de MTC périodiques comprend une fenêtre de SI de MTC définie par une fenêtre temporelle où le MIB de MTC est répété.

11. Procédé selon la revendication 10, où une longueur de la fenêtre de SI de MTC pour l'UE à couverture étendue est différente d'une longueur de fenêtre de SI existante, et
où une périodicité de la fenêtre de SI de MTC correspond à une périodicité de la fenêtre de SI existante.

12. Équipement utilisateur à couverture étendue, UE, pour communiquer avec une station de base, l'UE à couverture étendue comprenant un contrôleur configuré pour commander le fonctionnement de l'UE selon le procédé de l'une des revendications 7 à 11.

FIG. 1

FIG. 2A

FIG. 2B

FIG. 3A

103

370a    372a        370b    372b                    370n    372n

RF TRANSCEIVER      RF TRANSCEIVER      o o o       RF TRANSCEIVER

374 — TX PROCESSING CIRCUITRY      RX PROCESSING CIRCUITRY — 376

BACKHAUL/ NETWORK IF      CONTROLLER/PROCESSOR — 378

382

MEMORY — 380

FIG. 3B

405

415

CHANGE NOTIFICATION

UPDATED INFORMATION

410

425 420 430

BCCH MODIFICATION PERIOD (n)

BCCH MODIFICATION PERIOD (n+1)

405a

405b

FIG. 4

500

525 — PBCH TTI
515 — PBCH TTI
520 — PBCH TTI

FRAME (10ms)

SF #5
510 — MTC-PBCH
510 — MTC-PBCH
SLOT = 0.5ms
0 1 2 3 4 5 6    0 1 2 3 4 5 6

SF #0
510 — MTC-PBCH
505 — PBCH
510 — MTC-PBCH
SLOT = 0.5ms
0 1 2 3 4 5 6    0 1 2 3 4 5 6    0 1 2 3 4 5 6

SF #0
505 — PBCH
SLOT = 0.5ms
0 1 2 3 4 5 6    0 1 2 3 4 5 6

FIG. 5

600

615

N₁
610

e.g.
80ms

N₂
625

40ms

o o o

o o o

620
MTC MIB1

605
MTC SIB1

630
MTC SIB2

## FIG. 6

700

MTC SIBx (OR
MULTIPLE MTC SIBs)

e.g.
40ms    N₁    80ms    N₂

40ms

o o o

o o o

o o o

MTC MIB1    MTC SIB1    MTC SIB2    705    MTC MIB1

710    MTC SYSTEM INFORMATION MODIFICATION PERIOD    710

707
FULL SET OF MTC MIB AND MTC SIBs ARE TRANSMITTED WITHIN
THE MTC SYSTEM INFORMATION MODIFICATION PERIOD

## FIG. 7

800

| 805 | UE RECEIVES MTC MIB |
| 810 | UE RECEIVES MTC SIB1 |
| 815 | UE RECEIVES MTC SIB2, INCLUDING MODIFICATION PERIOD COEFFICIENT AND DEFAULT PAGING CYCLE |
| 820 | UE DETERMINES THE MTC SI MODIFICATION PERIOD AS MODIFICATION PERIOD COEFFICIENT*DEFAULT PAGING CYCLE |
| 825 | UE DETERMINES THE START OF SYSTEM FRAME WHERE MTC MIB IS TRANSMITTED AS SFN MOD (MTC SI MODIFICATION PERIOD) = 0 |

FIG. 8

FIG. 9

900

40ms — MTC MIB1 910

N1 — MTC SIB1 915 e.g. 80ms

N2

e.g. 80ms

MTC SYSTEM INFORMATION MODIFICATION PERIOD

905

MTC MIB1 910

40ms

MTC MIB1 910

N1 — MTC SIB1 915 e.g. 80ms

N2

FIG. 10

CONTAIN MTC SI WINDOW LENGTH CONFIGURATIONS FOR SUBSEQUENT MTC SI MESSAGES

SI WINDOW LENGTH FOR FIRST MTC SI 1000

SI WINDOW LENGTH FOR SECOND MTC SI 1000

e.g. 80ms

40ms — MTC MIB1

N1 — MTC SIB1 1015

N2

MTC SIB2 (OR + SIB14) 1010

1010

MTC SIBx (OR MULTIPLE MTC SIBs)

40ms — MTC MIB1

MTC SYSTEM INFORMATION MODIFICATION PERIOD

FULL SET OF MTC MIB AND MTC SIBs ARE TRANSMITTED WITHIN THE MTC SYSTEM INFORMATION MODIFICATION PERIOD

1100

MIB  SIB1

INFORMATION BLOCK

RRC MESSAGE

SIB2 (SAME FOR LEGACY & MTC)

1105 — SIB2

1110 — FIRST SI  FIRST SI
COPY FOR MTC

LEGACY SIB3 & 4

SIB3  SIB4

SECOND SI

MTC SIB3 & 4

SIB3  SIB4

SECOND SI

1130

1115

1155  1135

| 1150 | MTC SI-WINDOW (FIRST MTC SI) | MTC SI-WINDOW (SECOND MTC SI) |
| SI-WINDOW (FIRST SI) | SI-WINDOW (SECOND SI) | 1160    1165 |

SFN=n+0  SFN=n+1  SFN=n+2  SFN=n+3  SFN=n+4  SFN=n+5  SFN=n+6  SFN=n+7

SI-WINDOW (FIRST SI)

SFN=n+160  SFN=n+161  SFN=n+162  SFN=n+163

SI PERIODICITY FOR FIRST SI (160ms)  1120

SI PERIODICITY FOR FIRST SI (160ms)  1120

TO FIG. 11B

SI PERIODICITY FOR SECOND SI (320ms)

1140

1132  MTC SI PERIODICITY FOR FIRST AND SECOND MTC SI (320ms)

MTC UEs COMBINE FIRST SI MESSAGES (WHICH CAN INCLUDE THE LEGACY FIRST SI MESSAGE)

MTC UE COMBINES SECOND SI MESSAGES

OPTIONALLY, SECOND SI CAN ALSO BE COMBINED ACROSS MULTIPLE MTC SI-WINDOWS WITHIN THE BCCH MODIFICATION PERIOD, IF THE CONTENT OF SECOND SI DOESN'T CHANGE ACROSS MTC SI-WINDOWS

OPTIONALLY, FIRST SI CAN ALSO BE COMBINED ACROSS MULTIPLE MTC SI-WINDOWS WITHIN THE BCCH MODIFICATION PERIOD, IF THE CONTENT OF FIRST SI DOESN'T CHANGE ACROSS MTC SI-WINDOWS

FIG. 11A

FIG. 11B

FIG. 12A

1200

MIB  SIB1

INFORMATION BLOCK

SIB2 (SAME FOR LEGACY & MTC)

1205 — SIB2

LEGACY SIB3 & 4

SIB3  SIB4

MTC SIB3 & 4

SIB3  SIB4 — 1212

RRC 1210 MESSAGE

FIRST SI   FIRST SI   COPY FOR MTC

SECOND SI   SECOND SI — 1215

1255

1250   MTC SI-WINDOW (FIRST MTC SI)   MTC SI-WINDOW (SECOND MTC SI)   MTC SI-WINDOW (FIRST MTC SI)

SI-WINDOW (FIRST SI) | SI-WINDOW (SECOND SI) | — 1260 | 1265 | SI-WINDOW (FIRST SI) | SI-WINDOW (SECOND SI)

SFN=0 | SFN=n+1 | SFN=n+2 | SFN=n+3 | SFN=n+4 | SFN=n+5 | SFN=n+6 | SFN=n+7 | SFN=n+160 | SFN=n+161 | SFN=n+162 | SFN=n+163

o o o     o o o

TO FIG. 12B

SI PERIODICITY FOR FIRST SI (160ms)   1220   SI PERIODICITY FOR FIRST SI (160ms)

1225   SI PERIODICITY FOR SECOND SI (320ms)   1220

MTC UEs COMBINE FIRST SI MESSAGES (WHICH CAN INCLUDE THE LEGACY FIRST SI MESSAGE)

MTC UE COMBINES SECOND SI MESSAGES

MTC UEs COMBINE FIRST SI MESSAGES (WHICH CAN INCLUDE THE LEGACY FIRST SI MESSAGE)

OPTIONALLY, SECOND SI CAN ALSO BE COMBINED ACROSS MULTIPLE MTC SI-WINDOWS WITHIN THE BCCH MODIFICATION PERIOD, IF THE CONTENT OF SECOND SI DOESN'T CHANGE ACROSS MTC SI-WINDOWS

OPTIONALLY, FIRST SI CAN ALSO BE COMBINED ACROSS MULTIPLE MTC SI-WINDOWS WITHIN THE BCCH MODIFICATION PERIOD, IF THE CONTENT OF FIRST SI DOESN'T CHANGE ACROSS MTC SI-WINDOWS

FIG. 12A

EP 3 063 881 B1

40

1200

MIB | SIB1

INFORMATION BLOCK

SIB2 (SAME FOR LEGACY & MTC)

1205 — SIB2

LEGACY SIB3 & 4

SIB3 | SIB4

MTC SIB3 & 4

SIB3 | SIB4 — 1212

RRC 1210 — MESSAGE

FIRST SI | FIRST SI

COPY FOR MTC

SECOND SI

SECOND SI — 1215

| MTC SI-WINDOW (FIRST MTC SI) | | | | MTC SI-WINDOW (SECOND MTC SI) | | | |
|---|---|---|---|---|---|---|---|
| SI-WINDOW (FIRST SI) | | SI-WINDOW (SECOND SI) | | | | | |
| SFN=n+320 | SFN=n+321 | SFN=n+322 | SFN=n+323 | SFN=n+324 | SFN=n+325 | SFN=n+326 | SFN=n+327 |

○ ○ ○

FROM FIG. 12A

MTC UEs COMBINE FIRST SI MESSAGES (WHICH CAN INCLUDE THE LEGACY FIRST SI MESSAGE)

MTC UE COMBINES SECOND SI MESSAGES

OPTIONALLY, FIRST SI CAN ALSO BE COMBINED ACROSS MULTIPLE MTC SI-WINDOWS WITHIN THE BCCH MODIFICATION PERIOD, IF THE CONTENT OF FIRST SI DOESN'T CHANGE ACROSS MTC SI-WINDOWS

OPTIONALLY, SECOND SI CAN ALSO BE COMBINED ACROSS MULTIPLE MTC SI-WINDOWS WITHIN THE BCCH MODIFICATION PERIOD, IF THE CONTENT OF SECOND SI DOESN'T CHANGE ACROSS MTC SI-WINDOWS

FIG. 12B

1300

116 — MTC UE      NODEB — 103

MTC MIB, SIB1, SIB2, SIB14 VIA BROADCAST CHANNEL

1305

RRC CONNECTION ESTABLISHMENT

1310

MTC SIB 3, 4, 5 VIA
DEDICATED RRC MESSAGES

1315

ACK

1320   UPDATE OF MTC SIB 3, 4, 5 VIA
DEDICATED RRC MESSAGES

1325

ACK

1330

RRC CONNECTION RELEASE

1335

RRC IDLE MODE
PROCEDURE
ACCORDING TO
CONFIGURATION     — 1340
OBTAINED FROM
MTC SIB 3, 4, 5

FIG. 13

1400

116 ~ MTC UE

NODEB ~ 103

MTC MIB, SIB1, SIB2, SIB14 VIA BROADCAST CHANNEL

1405

RRC CONNECTION ESTABLISHMENT

1410

MTC SIB 3, 4, 5 VIA
DEDICATED RRC MESSAGES

1415

ACK

1420

CHANGE NOTIFICATION FOR
MTC SIB 3, 4, 5 VIA PAGING

1425

MTC SIB 3, 4, 5 VIA COMMON
BROADSCAST CHANNEL

1430

RRC CONNECTION RELEASE

1435

RRC IDLE MODE
PROCEDURE
ACCORDING TO
CONFIGURATION
OBTAINED FROM
MTC SIB 3, 4, 5

~ 1440

FIG. 14

FIG. 15

FIG. 16

FIG. 17

1800

1805 — UE SELECTS TB OF HIGHEST PRIORITY

1810 — UE CALCULATES THE SIZE OF THE REMAINING TB(S) THAT THE UE CAN RECEIVE

1815 — SIZE OF THE NEWLY CONSIDERED TB $\leq$ SIZE OF THE REMAINING TB(S) THAT THE UE CAN RECEIVE?

YES

NO

1825 — RECEIVE THE SET OF TB(S) SELECTED

SELECT TO RECEIVE THE SET OF TB(S) — 1820

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Repetitive Patterns Impact upon MTC Device's Overall Access Lat. **FUJITSU.** 3GPP Draft; R1-133130 REPETITIVE PATTERN IMPACT. 3rd Generation Partnership Project (3GPP), 10 August 2013
- E-UTRA, Physical channels and modulation. *3GPP TS 36.211 v11.2.0*
- E-UTRA, Multiplexing and Channel coding. *3GPP TS 36.212 v11.2.0*
- E-UTRA, Physical Layer Procedures. *3GPP TS 36.213 v11.2.0*
- E-UTRA, Physical Layer Measurement. *3GPP TS 36.214 v11.1.0*
- E-UTRA and E-UTRAN, Overall description. Stage 2. *3GPP TS 36.300 V11.5.0*
- E-UTRA, MAC protocol specification. *3GPP TS 36.321 V11.2.0*
- E-UTRA, RRC Protocol specification. *3GPP TS 36.331 V11.3.0*
- E-UTRA, Requirements for support of radio resource management. *3GPP TS 36.133 V11.4.0*
- E-UTRA, Further advancements for E-UTRA physical layer aspects. *3GPP TR 36.814 V9.0.0*
- Design of Time-Tracking Reference Signal. *WD-201111-007-1-US0*